# EUROPEAN PATENT APPLICATION

(11) **EP 4 382 625 A1**
(43) Date of publication of application: **12.06.2024**
(21) Application number: 22864235.1
(22) Date of filing: 15.08.2022
(51) Int. Cl.: C21B 7/00, C01B 3/00, C21B 5/00

(54) **HYDROGEN HEATING APPARATUS FOR BLAST FURNACES, HYDROGEN HEATING METHOD FOR BLAST FURNACES, AND BLAST FURNACE OPERATION METHOD**

(30) Priority: 31.08.2021 JP 2021141969
(71) Applicant: Clean Planet Inc., Minato-ku Tokyo 105-0022 (JP)
(72) Inventor: ENDO, Yoshito, Tokyo 105-0022 (JP); IWAMURA, Yasuhiro, Sendai-shi, Miyagi 980-8577 (JP); ITO, Takehiko, Tokyo 105-0022 (JP); YOSHINO, Hideki, Tokyo 105-0022 (JP)
(74) Representative: Bandpay & Greuter
(86) International application number: PCT/JP2022/030878
(87) International publication number: WO 2023/032650

(57) **Abstract**

Provided are a novel hydrogen heating device for a blast furnace, a novel hydrogen heating method for a blast furnace, and a novel method for operating a blast furnace that can reduce a generation amount of CO₂ even if a hydrogen-based gas is used as a reducing gas. A hydrogen heating device for a blast furnace 11 includes: a sealed container 15 configured to allow a hydrogen-based gas to be led in; a heat generating element 14 provided inside the sealed container 15 and configured to generate heat by occluding and discharging hydrogen; and a temperature adjustment unit configured to adjust a temperature of the heat generating element 14. The heat generating element 14 includes one or more stacked bodies 14a each including a support 61 made of at least one of a porous body, a hydrogen permeable film, and a proton conductor, and a multilayer film 62 supported by the support 61. The multilayer film 62 has a first layer made of a hydrogen storage metal or a hydrogen storage alloy and having a thickness of less than 1000 nm, and a second layer made of a hydrogen storage metal or a hydrogen storage alloy different from the first layer, or ceramics and having a thickness of less than 1000 nm. The hydrogen-based gas is heated to a predetermined temperature by the heat generating element 14.

## Description

### Technical Field

The present invention relates to a hydrogen heating device for a blast furnace, a hydrogen heating method for a blast furnace, and a method for operating a blast furnace.

### Background Art

In general, coal (coke) is used as a main energy source in integrated steelworks including a blast furnace, a rolling furnace, rolling equipment, and energy supply equipment for supplying energy to the blast furnace, the rolling furnace, and the rolling equipment, and most of the coal is consumed in an iron making process (blast furnace, coke oven, sintering machine), and by-product gas and waste heat generated in the iron making process are effectively utilized as an energy source for various kinds of equipment in the steelworks.

On the other hand, in view of global environmental problems, it is required to reduce a generation amount of CO₂. A generation amount of CO₂ generated from the iron making process occupies the majority of CO₂ generated from the entire steelworks, and in particular, an amount of CO₂ discharged from a blast furnace is the largest. Therefore, an operation at a low reducing agent ratio due to improvement in reducibility of a raw material used in a blast furnace and reduction efficiency improvement measures such as optimization of a distribution of materials charged into a furnace top, specifically, reduction of a reducing agent (coke) and replacement of a part or entire of the reducing agent with a hydrogen-based gas containing hydrogen have been studied.

A coke reduction reaction using coke (a reaction in which C is oxidized into CO₂ and Fe₂O₃ is reduced into Fe) in an iron making process in the related art is a heat generating reaction. The above-described reduction reaction has a characteristic that the reaction proceeds spontaneously.

On the other hand, hydrogen reduction using hydrogen instead of coke (a reaction in which H₂ is oxidized to H₂O and Fe₂O₃ is reduced to Fe) is an endothermic reaction. Because of the endothermic reaction, a reduction rate decreases. Furthermore, when a reduction efficiency of the blast furnace is improved, an amount of heat generation of a gas discharged from the blast furnace decreases. Therefore, when a supply amount of energy supplied to various kinds of equipment in the steelworks is less than a demand amount, the energy has to be procured from the outside.

Non-Patent Literature 1 describes that a decrease in a temperature in the vicinity of 200°C to 600°C in a blast furnace occurs due to blowing-in of hydrogen in an iron making process. Since a reaction proceeds directly below an iron ore inlet, a decrease in the temperature is remarkable particularly in the vicinity of the inlet.

Patent Literature 1 describes that in order to maintain a calorific value of a blast furnace that performs hydrogen reduction in an iron making process, a blowing amount of a hydrogen-based gas is determined based on an action line obtained in advance.

Patent Literature 2 describes that a heated hydrogen-based gas is utilized as a reducing gas instead of coke in an iron making process. By using the heated hydrogen-based gas in the iron making process, it is possible to increase the blowing amount of the hydrogen-based gas and improve a reduction efficiency.

### Citation List

### Patent Literature

Patent Literature 1: JP2020-66753A
Patent Literature 2: JP2017-172026A

### Non-Patent Literature

Non-Patent Literature 1: Iron and Steel Vol. 100 (2014) No. 2, pp. 143 to 147

### Summary of Invention

### Technical Problem

As described in Patent Literature 2, when the heated hydrogen-based gas is used as the reducing gas in the iron making process, since an ignition point of hydrogen is as low as 500°C, direct heating of the hydrogen-based gas involves a risk of ignition, and thus indirect heating is studied. In general, since the indirect heating reduces a heat transfer efficiency, a larger amount of energy is consumed for heating the hydrogen-based gas in the indirect heating than that in the direct heating. Since a large amount of hydrogen is consumed, it is necessary to heat a large amount of hydrogen-based gas, and heating requires a huge amount of energy. As described above, when a part or all of a reducing agent is replaced with the hydrogen-based gas in order to reduce a generation amount of CO₂, a large amount of energy is consumed for heating the hydrogen-based gas, and as a result, it is difficult to reduce the generation amount of CO₂.

Therefore, an object of the present invention is to provide a novel hydrogen heating device for a blast furnace, a novel hydrogen heating method for a blast furnace, and a novel method for operating a blast furnace that can reduce a generation amount of CO₂ even if a hydrogen-based gas is used as a reducing gas.

### Solution to Problem

A hydrogen heating device for a blast furnace according to the present invention relates to a hydrogen heating device for a blast furnace that heats a hydrogen-based gas containing hydrogen and supplies the hydrogen-based gas to the blast furnace, the hydrogen heating device for a blast furnace including: a sealed container configured to allow the hydrogen-based gas to be led in; a heat generating element provided inside the sealed container and configured to generate heat by occluding and discharging the hydrogen; and a temperature adjustment unit configured to adjust a temperature of the heat generating element. The heat generating element includes one or more stacked bodies each including a support made of at least one of a porous body, a hydrogen permeable film, and a proton conductor, and a multilayer film supported by the support. The multilayer film has a first layer made of a hydrogen storage metal or a hydrogen storage alloy and having a thickness of less than 1000 nm, and a second layer made of a hydrogen storage metal or a hydrogen storage alloy different from the first layer, or ceramics and having a thickness of less than 1000 nm. The hydrogen-based gas is heated to a predetermined temperature by the heat generating element.

A hydrogen heating method for a blast furnace according to the present invention relates to a hydrogen heating method for a blast furnace that heats a hydrogen-based gas containing hydrogen and supplies the hydrogen-based gas to the blast furnace, the hydrogen heating method including: a lead-in step of leading the hydrogen-based gas into a sealed container; a temperature adjusting step of adjusting a temperature of a heat generating element provided inside the sealed container by a temperature adjustment unit; and a heat generating step of generating heat from the heat generating element by occluding and discharging the hydrogen in the heat generating element. The heat generating element includes one or more stacked bodies each including a support made of at least one of a porous body, a hydrogen permeable film, and a proton conductor, and a multilayer film supported by the support. The multilayer film has a first layer made of a hydrogen storage metal or a hydrogen storage alloy and having a thickness of less than 1000 nm, and a second layer made of a hydrogen storage metal or a hydrogen storage alloy different from the first layer, or ceramics and having a thickness of less than 1000 nm. The hydrogen-based gas is heated to a predetermined temperature by the heat generating element.

A method for operating a blast furnace according to the present invention relates to a method for operating a blast furnace including a step of blowing a hydrogen-based gas as a reducing gas into the blast furnace from a tuyere of the blast furnace, in which the hydrogen-based gas is a hydrogen-based gas heated by the above-described hydrogen heating device for a blast furnace.

### Advantageous Effects of Invention

According to the present invention, since the hydrogen-based gas can be heated without consuming a large amount of energy, a generation amount of CO₂ can be reduced. Therefore, by using the heated hydrogen-based gas as the reducing gas in the blast furnace in this manner, the generation amount of CO₂ can be reduced even if the hydrogen-based gas is used as the reducing gas.

### Brief Description of Drawings

Fig. 1 is a schematic diagram of a hydrogen heating device for a blast furnace according to a first embodiment.
Fig. 2 is a cross-sectional view showing a structure of a heat generating element.
Fig. 3 is a cross-sectional view showing a structure of stacked bodies each including a first layer and a second layer.
Fig. 4 is a diagram illustrating generation of excess heat.
Fig. 5 is a diagram illustrating a function of the hydrogen heating device for a blast furnace.
Fig. 6 is a cross-sectional view showing a structure of a heat generating element according to a first modification in which a plurality of stacked bodies are stacked.
Fig. 7 is a diagram illustrating the heat generating element according to the first modification.
Fig. 8 is a diagram illustrating a heat generating element having multilayer films on two surfaces according to a second modification.
Fig. 9 is a diagram illustrating a heat generating element having a first layer, a second layer, and a third layer according to a third modification.
Fig. 10 is a diagram illustrating a heat generating element having a first layer, a second layer, a third layer, and a fourth layer according to a fourth modification.
Fig. 11 is a graph showing a relationship between a ratio of layer thicknesses of the multilayer film and the excess heat.
Fig. 12 is a graph showing a relationship between the number of layers of the multilayer film and the excess heat.
Fig. 13 is a graph showing a relationship between a material of the multilayer film and the excess heat.
Fig. 14 is a cross-sectional view showing a heat generating element formed into a bottomed cylindrical shape.
Fig. 15 is a schematic diagram showing a hydrogen heating device for a blast furnace according to a fifth modification.
Fig. 16 is a cross-sectional view showing a heat generating element including a support formed into a columnar shape.
Fig. 17 is a schematic diagram showing a hydrogen heating device for a blast furnace according to a sixth modification.
Fig. 18 is a schematic diagram showing a hydrogen heating device for a blast furnace according to a seventh modification.
Fig. 19 is a schematic diagram showing a hydrogen heating device for a blast furnace according to an eighth modification.
Fig. 20 is a diagram illustrating a nozzle portion having a plurality of ejection ports.
Fig. 21 is a cross-sectional view showing a cylindrical heat generating element having two open ends.
Fig. 22 is a schematic diagram showing a hydrogen heating device for a blast furnace according to a ninth modification.
Fig. 23 is a schematic diagram showing a hydrogen heating device for a blast furnace according to a tenth modification.
Fig. 24 is a diagram illustrating a first mode of a hydrogen pressure control unit.
Fig. 25 is a diagram illustrating a second mode of the hydrogen pressure control unit.
Fig. 26 is a schematic diagram showing a hydrogen heating device for a blast furnace according to an eleventh modification.
Fig. 27 is a diagram illustrating a function of the hydrogen heating device for a blast furnace according to the eleventh modification.
Fig. 28 is a cross-sectional view showing a hydrogen heating device for a blast furnace according to a twelfth modification.
Fig. 29 is a graph showing a relationship among a hydrogen permeation amount, a hydrogen supply pressure, and a sample temperature in a reference experiment.
Fig. 30 is a graph showing a relationship between the sample temperature and input electric power in the reference experiment.
Fig. 31 is a graph showing a relationship between a heat generating element temperature and excess heat in Experimental Example 26.
Fig. 32 is a graph showing a relationship between a heat generating element temperature and excess heat in Experimental Example 27.
Fig. 33 is a schematic diagram showing a hydrogen heating device for a blast furnace according to a second embodiment.
Fig. 34 is a schematic diagram showing a hydrogen heating device for a blast furnace according to a third embodiment.
Fig. 35 is an exploded perspective view showing a heat generating structure.

### Description of Embodiments

### [First Embodiment]

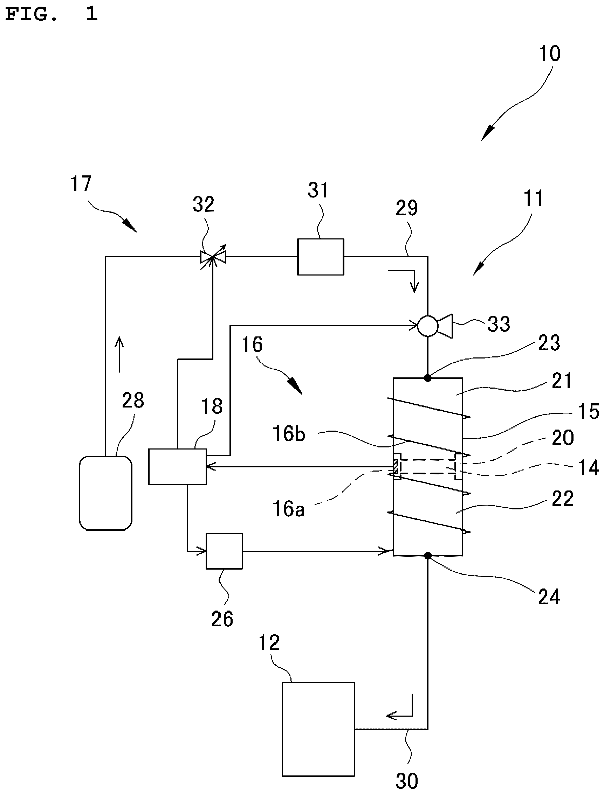

As shown in Fig. 1, blast furnace equipment 10 includes a hydrogen heating device for a blast furnace 11 and a blast furnace 12. During an operation on the blast furnace, the blast furnace equipment 10 heats a hydrogen-based gas containing hydrogen by heat generated by the heat generating element 14 of the hydrogen heating device for a blast furnace 11, supplies the heated hydrogen-based gas as a reducing gas from the hydrogen heating device for a blast furnace 11 to the blast furnace 12, and blows the heated hydrogen-based gas into the blast furnace 12 through a tuyere of the blast furnace 12.

For example, the blast furnace 12 is not particularly limited, and a blast furnace described in Patent Literature 1 or Patent Literature 2 can be applied. For example, an iron-based raw material is inserted into the blast furnace from a furnace top of the blast furnace, and the heated hydrogen-based gas as the reducing gas is blown together with hot air through a tuyere provided in the blast furnace.

The hydrogen heating device for a blast furnace 11 includes a heat generating element 14, a sealed container 15, a temperature adjustment unit 16, a hydrogen circulation line 17 including a lead-in line 29 and a lead-out line 30, and a control unit 18. The heat generating element 14 is accommodated in the sealed container 15 and is heated by a heater 16b of the temperature adjustment unit 16 described later. The heat generating element 14 generates heat (hereinafter, referred to as excess heat) having a temperature equal to or higher than a heating temperature of the heater 16b by occluding and discharging hydrogen. The heat generating element 14 heats the permeating hydrogen-based gas to a temperature within a range of, for example, 50°C or higher and 1000°C or lower by generating the excess heat. In the present embodiment, the heat generating element 14 is formed into a plate shape having a front surface and a back surface. A detailed configuration of the heat generating element 14 will be described later with reference to another drawing.

The sealed container 15 is a hollow container, and accommodates the heat generating element 14 therein. The sealed container 15 is made of, for example, stainless steel. In the present embodiment, the sealed container 15 has a shape having a longitudinal direction parallel to a direction orthogonal to the front surface or the back surface of the heat generating element 14. An installation portion 20 for installing the heat generating element 14 is provided inside the sealed container 15.

The inside of the sealed container 15 has a first chamber 21 and a second chamber 22 partitioned by the heat generating element 14. The first chamber 21 is defined by the front surface that is one surface of the heat generating element 14 and an inner surface of the sealed container 15. The first chamber 21 has an inlet 23 connected to the lead-in line 29 of the hydrogen circulation line 17. The hydrogen-based gas circulating through the hydrogen circulation line 17 is led into the first chamber 21 through the inlet 23. The second chamber 22 is defined by the back surface that is the other surface of the heat generating element 14 and the inner surface of the sealed container 15. The second chamber 22 has an outlet 24 connected to the lead-out line 30 of the hydrogen circulation line 17. The hydrogen-based gas in the second chamber 22 is supplied from the second chamber 22 to the blast furnace 12 through the lead-out line 30 connected to the outlet 24.

The first chamber 21 is pressurized by leading in the hydrogen-based gas. The second chamber 22 is depressurized by leading out the hydrogen-based gas. Accordingly, a hydrogen pressure in the first chamber 21 is higher than a hydrogen pressure in the second chamber 22. The hydrogen pressure in the first chamber 21 is, for example, 100 [kPa]. The hydrogen pressure in the second chamber 22 is, for example, 1 × 10⁻⁴ [Pa] or less. The second chamber 22 may be in a vacuum state. In this manner, the first chamber 21 and the second chamber 22 have different hydrogen pressures. Therefore, the inside of the sealed container 15 is in a state in which a pressure difference is generated between two sides of the heat generating element 14.

When the pressure difference is generated between the two sides of the heat generating element 14, a hydrogen molecule contained in the hydrogen-based gas is adsorbed on the one surface (the front surface) of the heat generating element 14 at a high pressure side, and the hydrogen molecule is dissociated into two hydrogen atoms. The hydrogen atoms obtained by dissociation infiltrate into the heat generating element 14. That is, hydrogen is occluded into the heat generating element 14. The hydrogen atoms diffuse into and pass through the heat generating element 14. On the other surface (the back surface) of the heat generating element 14 at a low pressure side, the hydrogen atoms that pass through the heat generating element 14 are recombined with each other and discharged as a hydrogen molecule. That is, hydrogen is discharged from the heat generating element 14.

In this manner, hydrogen permeates through the heat generating element 14 from the high pressure side to the low pressure side. The phrase "permeate " refers to that hydrogen is occluded on the one surface of the heat generating element and discharged from the other surface of the heat generating element. The heat generating element 14 to be described in detail later generates heat by occluding hydrogen, and generates heat also by discharging hydrogen. Therefore, the heat generating element 14 generates heat by permeation of hydrogen. In the following description, the description that "hydrogen permeates through" the heat generating element may be described as "the hydrogen-based gas permeates through" the heat generating element.

A pressure sensor (not shown) that detects an internal pressure of the first chamber 21 is provided inside the first chamber 21. A pressure sensor (not shown) that detects an internal pressure of the second chamber 22 is provided inside the second chamber 22. The pressure sensors provided in the first chamber 21 and the second chamber 22 are electrically connected to the control unit 18, and output signals corresponding to the detected pressures to the control unit 18.

The temperature adjustment unit 16 adjusts a temperature of the heat generating element 14 and maintains the heat generating element 14 at an appropriate temperature for heat generation. The appropriate temperature for heat generation in the heat generating element 14 is within a range of, for example, 50°C or higher and 1000°C or lower. The temperature adjustment unit 16 includes a temperature sensor 16a and the heater 16b. The temperature sensor 16a detects the temperature of the heat generating element 14. The temperature sensor 16a is, for example, a thermocouple, and is provided in the installation portion 20 of the sealed container 15. The temperature sensor 16a is electrically connected to the control unit 18, and outputs a signal corresponding to the detected temperature to the control unit 18.

The heater 16b heats the heat generating element 14. The heater 16b is, for example, an electric heating wire of an electric resistance heat generating type, and is wound around an outer periphery of the sealed container 15. The heater 16b is electrically connected to a power supply 26, and generates heat by inputting electric power from the power supply 26. The heater 16b may be an electric furnace disposed to cover the outer periphery of the sealed container 15.

The hydrogen circulation line 17 is provided outside the sealed container 15, leads the hydrogen-based gas containing hydrogen from the outside to the inside of the sealed container 15, and also leads out the heated hydrogen-based gas from the inside to the outside of the sealed container 15. The hydrogen circulation line 17 includes a hydrogen tank 28 and a filter 31 in addition to the lead-in line 29 and the lead-out line 30. Although not shown in Fig. 1, the hydrogen heating device for a blast furnace 11 includes a supply line for supplying the hydrogen-based gas to the hydrogen tank 28, and an evacuation line for evacuating the hydrogen-based gas from the hydrogen circulation line 17. For example, the hydrogen-based gas is supplied from the supply line to the hydrogen tank 28 when an operation of the hydrogen heating device for a blast furnace 11 is started, and the hydrogen-based gas in the hydrogen circulation line 17 is evacuated to the evacuation line when the operation of the hydrogen heating device for a blast furnace 11 is stopped.

The hydrogen tank 28 stores the hydrogen-based gas. The hydrogen-based gas is a gas containing isotopes of hydrogen. As the hydrogen-based gas, at least one of a deuterium gas and a protium gas is used. The protium gas includes a mixture of naturally occurring protium and deuterium, that is, a mixture in which an abundance ratio of protium is 99.985% and an abundance ratio of deuterium is 0.015%.

The lead-in line 29 connects the hydrogen tank 28 and the inlet 23 of the first chamber 21, and leads the hydrogen-based gas stored in the hydrogen tank 28 into the first chamber 21. The lead-in line 29 includes a pressure adjustment valve 32. The pressure adjustment valve 32 depressurizes the hydrogen-based gas sent from the hydrogen tank 28 to a predetermined pressure. The pressure adjustment valve 32 is electrically connected to the control unit 18. The lead-in line 29 has a pump 33. The pump 33 introduces the hydrogen-based gas in the hydrogen tank 28 into the first chamber 21. Examples of the pump 33 include a metal bellows pump. The pump 33 is electrically connected to the control unit 18.

The lead-out line 30 connects the outlet 24 of the second chamber 22 and the blast furnace 12, supplies, to the blast furnace 12, the hydrogen-based gas that permeates through the heat generating element 14 from the first chamber 21 to the second chamber 22.

The filter 31 provided on the lead-in line 29 removes impurities contained in the hydrogen-based gas. Here, a permeation amount of hydrogen permeating through the heat generating element 14 (hereinafter, referred to as a hydrogen permeation amount) is determined by the temperature of the heat generating element 14, the pressure difference between two sides of the heat generating element 14, and a front surface state of the heat generating element 14. When the hydrogen-based gas contains impurities, the impurities may adhere to the front surface of the heat generating element 14, and may deteriorate the front surface state of the heat generating element 14. When the impurities adhere to the front surface of the heat generating element 14, adsorption and dissociation of the hydrogen molecule on the front surface of the heat generating element 14 are hindered, and the hydrogen permeation amount decreases.

Examples of impurities that hinder the adsorption and dissociation of the hydrogen molecule on the front surface of the heat generating element 14 include water (including steam), hydrocarbons (methane, ethane, methanol, ethanol, and the like), C, S, and Si. It is considered that water is discharged from an inner wall or the like of the sealed container 15, or is obtained by reducing, by hydrogen, an oxide film contained in a member provided inside the sealed container 15. It is considered that hydrocarbons, C, S, and Si are discharged from various members provided inside the sealed container 15. Therefore, the filter 31 at least removes the impurities including water (including steam), hydrocarbons, C, S, and Si. The filter 31 removes the impurities contained in the hydrogen-based gas, so that the hydrogen permeation amount through the heat generating element 14 can be prevented from decreasing.

The control unit 18 controls an operation of each unit of the hydrogen heating device for a blast furnace 11. The control unit 18 mainly includes, for example, an arithmetic device (a central processing unit), and a storage unit such as a read only memory and a random access memory. The arithmetic device executes various kinds of arithmetic processing using a program, data, and the like stored in the storage unit.

The control unit 18 is electrically connected to the temperature sensor 16a, the power supply 26, the pressure adjustment valve 32, and the pump 33. The control unit 18 controls an output of the excess heat generated in the heat generating element 14 by adjusting input electric power of the heater 16b, a pressure of the sealed container 15, and the like.

The control unit 18 functions as an output control unit that controls an output of the heater 16b based on the temperature detected by the temperature sensor 16a. The control unit 18 controls the power supply 26 to adjust input electric power to the heater 16b, thereby maintaining the heat generating element 14 at an appropriate temperature for heat generation.

The control unit 18 controls the pressure adjustment valve 32 and the pump 33 to adjust a hydrogen pressure difference generated between the first chamber 21 and the second chamber 22, based on a pressure detected by the pressure sensor (not shown) provided in each of the first chamber 21 and the second chamber 22.

The control unit 18 performs a hydrogen occluding step of occluding hydrogen in the heat generating element 14 and a hydrogen discharging step of discharging hydrogen from the heat generating element 14. In the present embodiment, the control unit 18 simultaneously performs the hydrogen occluding step and the hydrogen discharging step by generating the hydrogen pressure difference between the first chamber 21 and the second chamber 22. The control unit 18 causes a pressure in the first chamber 21 to be higher than a pressure in the second chamber 22 by leading the hydrogen-based gas through the lead-in line 29 to the first chamber 21 and leading out the hydrogen-based gas in the second chamber 22 to the lead-out line 30, and maintains a state in which occluding of hydrogen on the front surface of the heat generating element 14 and discharging of hydrogen on the back surface of the heat generating element 14 are simultaneously performed.

The phrase "simultaneously" in the present disclosure refers to exact simultaneous or refers to a short period of time to an extent that can be regarded as substantially simultaneous. Since hydrogen continuously permeates through the heat generating element 14 by simultaneously performing the hydrogen occluding step and the hydrogen discharging step, the excess heat can be efficiently generated in the heat generating element 14. The control unit 18 may alternately repeat the hydrogen occluding step and the hydrogen discharging step. That is, the control unit 18 may first perform the hydrogen occluding step to occlude hydrogen in the heat generating element 14, and thereafter perform the hydrogen discharging step to discharge hydrogen occluded in the heat generating element 14. In this manner, the excess heat can be generated by the heat generating element 14 by alternately repeating the hydrogen occluding step and the hydrogen discharging step.

In the hydrogen heating device for a blast furnace 11, when the hydrogen pressure difference is generated between the first chamber 21 and the second chamber 22 that sandwich the heat generating element 14, hydrogen permeates through the heat generating element 14 and the excess heat is generated. The hydrogen-based gas is heated by the excess heat generated by the heat generating element 14 when permeating through the heat generating element 14. The thicker the heat generating element 14 is and the longer a distance for the hydrogen-based gas to permeate through the heat generating element 14 is, the longer the time for heating the hydrogen-based gas by the excess heat generated by the heat generating element 14 is, and the temperature when the hydrogen-based gas permeates through the heat generating element 14 and is discharged to the second chamber 22 increases accordingly. The hydrogen-based gas is heated to a predetermined temperature by the heat generating element 14.

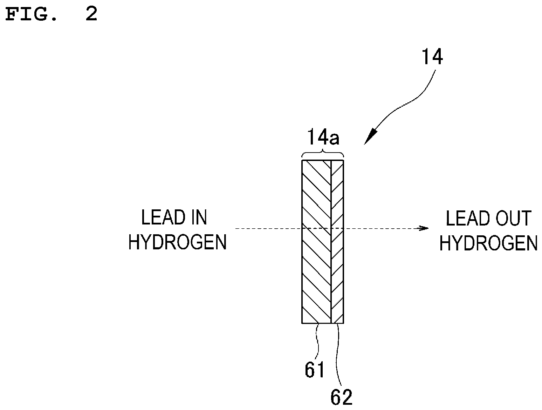

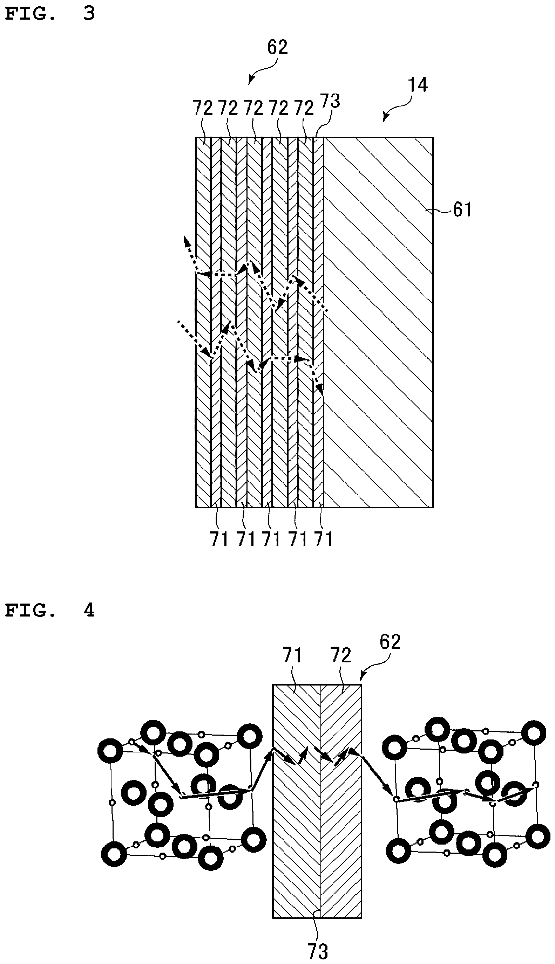

Next, a detailed structure of the heat generating element 14 will be described with reference to Figs. 2 and 3. As shown in Fig. 2, the heat generating element 14 includes a stacked body 14a including a support 61 and a multilayer film 62.

Here, for example, when the hydrogen-based gas at about 25°C permeates through the heat generating element 14, the hydrogen-based gas is heated by the heat generating element 14, and becomes a hydrogen-based gas at a temperature of 50°C or higher and 1000°C or lower, preferably 600°C or higher and 1000°C or lower after permeating through the heat generating element 14. In the present embodiment, a case where the hydrogen-based gas permeates through the support 61 at a left end in the paper toward the multilayer film 62 at a right end in the paper is shown in Fig. 2, but the present invention is not limited thereto, and the hydrogen-based gas may permeate through the multilayer film 62 at the right end in the paper toward the support 61 at the left end in the paper.

The support 61 is made of at least one of a porous body, a hydrogen permeable film, and a proton conductor. In the present embodiment, the support 61 is formed into a plate shape having a front surface and a back surface. The porous body has pores having a size through which the hydrogen-based gas can pass. The porous body is made of, for example, a metal, a non-metal, or ceramics. The porous body is preferably made of a material that does not hinder a reaction (hereinafter, referred to as a heat generating reaction) between the hydrogen-based gas and the multilayer film 62. The hydrogen permeable film is made of, for example, a hydrogen storage metal or a hydrogen storage alloy. Examples of the hydrogen storage metal include Ni, Pd, V, Nb, Ta, and Ti. Examples of the hydrogen storage alloy include LaNi₅, CaCu₅, MgZn₂, ZrNi₂, ZrCr₂, TiFe, TiCo, Mg₂Ni, and Mg₂Cu. The hydrogen permeable film is a film having a mesh-like sheet. Examples of the proton conductor include a BaCeO₃-based conductor (for example, Ba(Ce_{0.95}Y_{0.05})O_{3-δ}), a SrCeO₃-based conductor (for example, Sr(Ce_{0.95}Y_{0.05})O_{3-δ}), a CaZrO₃-based conductor (for example, CaZr_{0.95}Y_{0.05}O_{3-α}) , a SrZrO₃-based conductor (for example, SrZr_{0.9}Y_{0.1}O_{3-α}), β·Al₂O₃, and β·Ga₂O₃.

As shown in Fig. 3, the multilayer film 62 is provided on the support 61. The multilayer film 62 has a first layer 71 made of a hydrogen storage metal or a hydrogen storage alloy, and a second layer 72 made of a hydrogen storage metal or a hydrogen storage alloy different from the first layer 71, or ceramics. A heterogeneous material interface 73 to be described later is formed between the support 61 and the first layer 71 and the second layer 72. In Fig. 3, the multilayer film 62 is formed by alternately stacking the first layer 71 and the second layer 72 in order on one surface (for example, the front surface) of the support 61. The first layer 71 and the second layer 72 each have five layers. The number of layers of each of the first layer 71 and the second layer 72 may be changed as appropriate. The multilayer film 62 may be formed by alternately stacking the second layer 72 and the first layer 71 in order on the front surface of the support 61. The multilayer film 62 preferably has one or more first layers 71 and one or more second layers 72, and one or more heterogeneous material interfaces 73 are preferably formed.

The first layer 71 is made of, for example, any one of Ni, Pd, Cu, Mn, Cr, Fe, Mg, Co, and an alloy thereof. An alloy for forming the first layer 71 is preferably an alloy made of two or more of Ni, Pd, Cu, Mn, Cr, Fe, Mg, and Co. The alloy for forming the first layer 71 may be an alloy obtained by adding an additive element to Ni, Pd, Cu, Mn, Cr, Fe, Mg, and Co.

The second layer 72 is made of, for example, any one of Ni, Pd, Cu, Mn, Cr, Fe, Mg, Co, an alloy thereof, and SiC. An alloy for forming the second layer 72 is preferably an alloy made of two or more of Ni, Pd, Cu, Mn, Cr, Fe, Mg, and Co. The alloy for forming the second layer 72 may be an alloy obtained by adding an additive element to Ni, Pd, Cu, Mn, Cr, Fe, Mg, and Co.

A combination of the first layer 71 and the second layer 72 is preferably Pd-Ni, Ni-Cu, Ni-Cr, Ni-Fe, Ni-Mg, and Ni-Co when types of elements are expressed as "first layer 71-second layer 72 (second layer 72-first layer 71)". When the second layer 72 is made of ceramics, the "first layer 71-second layer 72" is preferably Ni-SiC.

As shown in Fig. 4, hydrogen atoms permeate through the heterogeneous material interface 73. Fig. 4 is a schematic diagram showing a state in which hydrogen atoms in a metal lattice of the first layer 71 permeate through the heterogeneous material interface 73 and move to a metal lattice of the second layer 72 in the first layer 71 and the second layer 72 each made of a hydrogen storage metal having a face-centered cubic structure. It is known that hydrogen is light and hops in a manner of quantum diffusion in hydrogen-occupied sites (octahedral sites or tetrahedral sites) of substance A and substance B. Therefore, hydrogen occluded in the heat generating element 14 hops in the multilayer film 62 in a manner of quantum diffusion. In the heat generating element 14, hydrogen permeates through the first layer 71, the heterogeneous material interface 73, and the second layer 72 in a manner of quantum diffusion.

A thickness of each of the first layer 71 and the second layer 72 is preferably less than 1000 nm. When the thickness of each of the first layer 71 and the second layer 72 is 1000 nm or more, hydrogen is less likely to permeate through the multilayer film 62. When the thickness of each of the first layer 71 and the second layer 72 is less than 1000 nm, a nano-structure that does not exhibit a bulk property can be maintained. The thickness of each of the first layer 71 and the second layer 72 is more preferably less than 500 nm. When the thickness of each of the first layer 71 and the second layer 72 is less than 500 nm, a nano-structure that does not exhibit a bulk property at all can be maintained.

An example of a method for manufacturing the heat generating element 14 will be described. In this case, the support 61 having a plate shape is prepared, an evaporation device is used to make a hydrogen storage metal or a hydrogen storage alloy for forming the first layer 71 or the second layer 72 into a gas phase state, and then the first layer 71 and the second layer 72 are alternately formed on the front surface of the support 61 by aggregation or adsorption. Accordingly, the stacked body 14a having the multilayer film 62 on the front surface of the support 61 is formed. The first layer 71 and the second layer 72 are preferably formed continuously in a vacuum state. Accordingly, between the first layer 71 and the second layer 72, no natural oxide film is formed and only the heterogeneous material interface 73 is formed. The evaporation device may be a physical evaporation device in which the hydrogen storage metal or the hydrogen storage alloy is evaporated by a physical method. The physical evaporation device is preferably a sputtering device, a vacuum evaporation device, and a chemical vapor deposition (CVD) device. The hydrogen storage metal or the hydrogen storage alloy may be deposited on the front surface of the support 61 by an electroplating method, and the first layer 71 and the second layer 72 may be alternately formed.

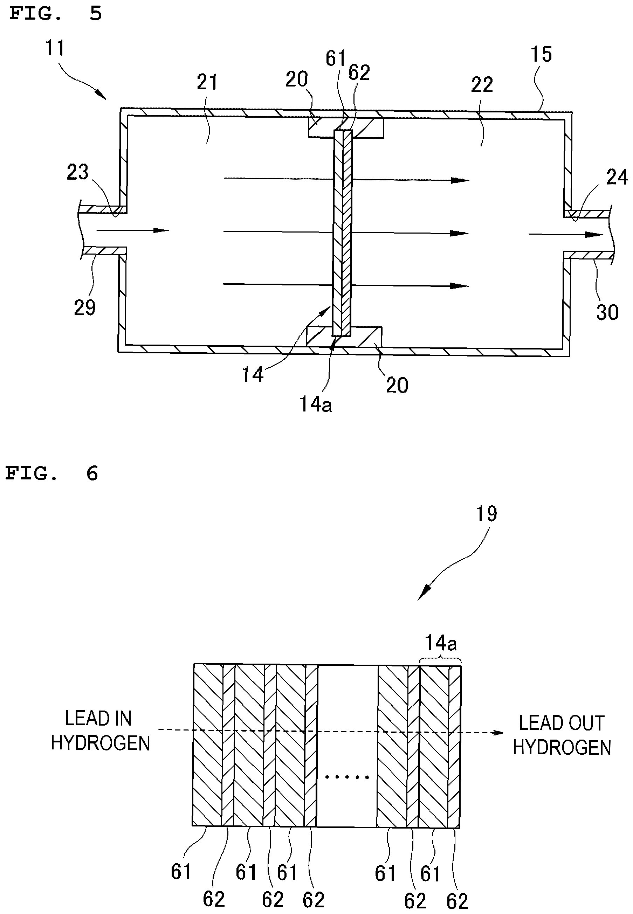

As shown in Fig. 5, in the heat generating element 14, for example, the support 61 of the stacked body 14a at one end is provided at a first chamber 21 side (a high pressure side), and the multilayer film 62 of the stacked body 14a at the other end is provided at a second chamber 22 side (a low pressure side). Due to the hydrogen pressure difference generated between the first chamber 21 and the second chamber 22, hydrogen led into the first chamber 21 permeates an inside of the heat generating element 14 sequentially through the support 61 and the multilayer film 62, and moves to the second chamber 22. The heat generating element 14 generates the excess heat when hydrogen permeates through the multilayer films 62, that is, by occluding hydrogen to the multilayer film 62 and discharging hydrogen from the multilayer film 62. In the heat generating element 14, the support 61 may be provided at the second chamber 22 side (the low pressure side) and the multilayer film 62 may be provided at the first chamber 21 side (the high pressure side).

The heat generating element 14 heats the permeating hydrogen-based gas by the generated excess heat. Since the heat generating element 14 generates heat using hydrogen, the heat generating element 14 can be said as a clean heat energy source without generating a greenhouse gas such as carbon dioxide. Hydrogen to be used is generated from water and is thus inexpensive. Unlike a nuclear fission reaction, heat generation of the heat generating element 14 is safe since there is no chain reaction. Therefore, since the hydrogen heating device for a blast furnace 11 utilizes such a heat generating element 14 as a heat energy source to heat the hydrogen-based gas, an inexpensive, clean, and safe heat energy source can be utilized to supply the heated hydrogen-based gas as the reducing gas to the blast furnace 12.

In the hydrogen heating device for a blast furnace 11 according to the present embodiment, since the hydrogen-based gas can be heated without consuming a large amount of energy, a generation amount of CO₂ can be reduced. Therefore, in the hydrogen heating device for a blast furnace 11, by using the heated hydrogen-based gas as the reducing gas in the blast furnace 12 in this manner during an operation on the blast furnace, the generation amount of CO₂ can be reduced even if the hydrogen-based gas is used as the reducing gas in the blast furnace 12.

The present invention is not limited to the above-described first embodiment and can be modified as appropriate without departing from the scope of the present invention. Hereinafter, modifications of the first embodiment will be described. In the drawings and a description of the modifications, the same or equivalent components and members as those in the above-described first embodiment are denoted by the same reference numerals. The repeated description with the above-described first embodiment is omitted as appropriate, and configurations different from those in the above-described first embodiment will be mainly described.

### [First Modification]

As shown in Fig. 6, a heat generating element 19 includes a plurality of stacked bodies 14a each including the support 61 and the multilayer film 62. Further, a thickness of the heat generating element 19 through which the hydrogen-based gas permeates is adjusted by changing the number of the stacked bodies 14a. Specifically, as the number of the stacked bodies 14a increases, the heat generating element 19 becomes thicker, and a distance for the hydrogen-based gas to permeate through the heat generating element 19 becomes longer, and thus the larger the number of the stacked bodies 14a is, the higher the temperature of the hydrogen-based gas after permeating through the heat generating element 19 becomes. On the other hand, as the number of the stacked bodies 14a decreases, the heat generating element 19 becomes thinner, and the distance for the hydrogen-based gas to permeate through the heat generating element 19 becomes longer, and thus the smaller the number of the stacked bodies 14a is, the lower the temperature of the hydrogen-based gas after permeating through the heat generating element 19 becomes.

When setting the number of the stacked bodies 14a, a correspondence between the temperature of the hydrogen-based gas after permeating through the heat generating element 19 and the number of the stacked bodies 14a is specified in advance based on past operational experience and the like, and it is desirable to specify the number of the stacked bodies 14a based on the correspondence such that the hydrogen-based gas reaches a desired temperature.

In the heat generating element 19, the support 61 of the second stacked body 14a is disposed on the multilayer film 62 of the first stacked body 14a, the support 61 of the third stacked body 14a is disposed on the multilayer film 62 of the second stacked body 14a, and the plurality of stacked bodies 14a are sequentially stacked. Accordingly, the heat generating element 19 shown in Fig. 6 has a configuration in which the supports 61 and the multilayer films 62 are alternately arranged in order from the left to the right, such as the support 61, the multilayer film 62, the support 61, and the multilayer film 62. In the present embodiment, a case where the hydrogen-based gas permeates from the support 61 at a left end in the paper toward the multilayer film 62 at a right end in the paper is shown, but the present invention is not limited thereto, and the hydrogen-based gas may permeate from the multilayer film 62 at the right end in the paper to the support 61 at the left end in the paper.

The heat generating element 19 can be manufactured by preparing the plurality of stacked bodies 14a, and overlapping the back surface of the support 61 of another stacked body 14a on a front surface of the multilayer film 62 of one stacked body 14a to stack the predetermined number of the stacked bodies 14a. After forming the one stacked body 14a, a new support 61 may be stacked on the front surface of the multilayer film 62 of the stacked body 14a, the evaporation device may be used to alternately form the first layer 71 and the second layer 72 on the front surface of the new support 61, and new stacked bodies 14a may be sequentially formed on a front surface of the one stacked body 14a.

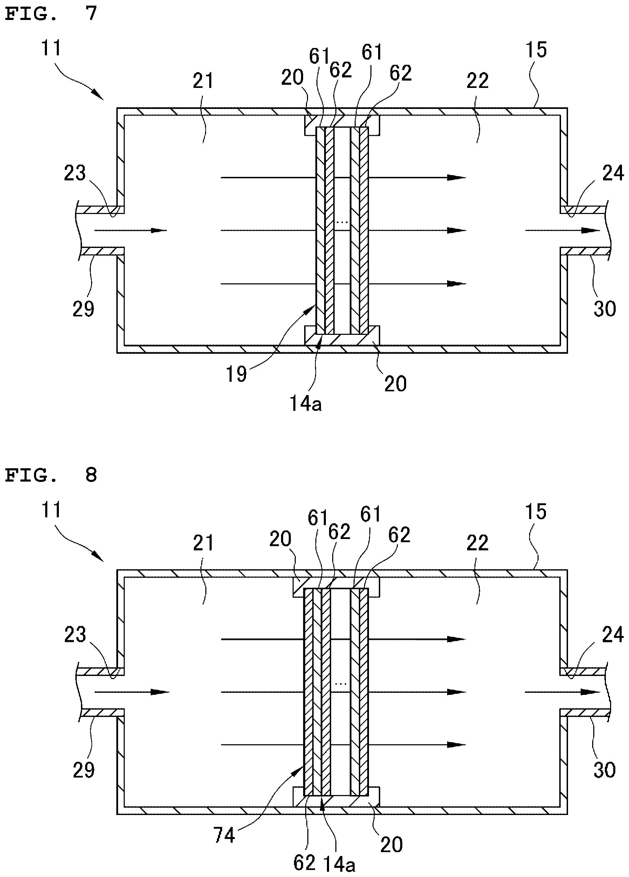

As shown in Fig. 7, in the heat generating element 19, for example, the support 61 of the stacked body 14a at one end is provided at a first chamber 21 side (a high pressure side), and the multilayer film 62 of the stacked body 14a at the other end is provided at a second chamber 22 side (a low pressure side). Due to the hydrogen pressure difference generated between the first chamber 21 and the second chamber 22, hydrogen led into the first chamber 21 permeates an inside of the heat generating element 19 sequentially through the support 61, the multilayer film 62, the support 61, the multilayer film 62, and the like, and moves to the second chamber 22. The heat generating element 19 generates the excess heat when hydrogen permeates through the multilayer films 62, that is, by occluding hydrogen to the multilayer films 62 and discharging hydrogen from the multilayer films 62. In the heat generating element 19, the support 61 may be provided at the second chamber 22 side (the low pressure side) and the multilayer film 62 may be provided at the first chamber 21 side (the high pressure side).

### [Second Modification]

As shown in Fig. 8, the hydrogen heating device for a blast furnace 11 may use a heat generating element 74 in which the multilayer film 62 is also provided on the back surface of the support 61 of the stacked body 14a disposed at one end, and the multilayer films 62 are provided on two surfaces of the support 61. The heat generating element 74 generates excess heat by permeation of hydrogen through the multilayer film 62, the support 61, the multilayer film 62, the support 61, the multilayer film 62, and the like in this order and occluding and discharging hydrogen in the multilayer films 62. A high output of excess heat can be achieved by using the heat generating element 74.

### [Third Modification]

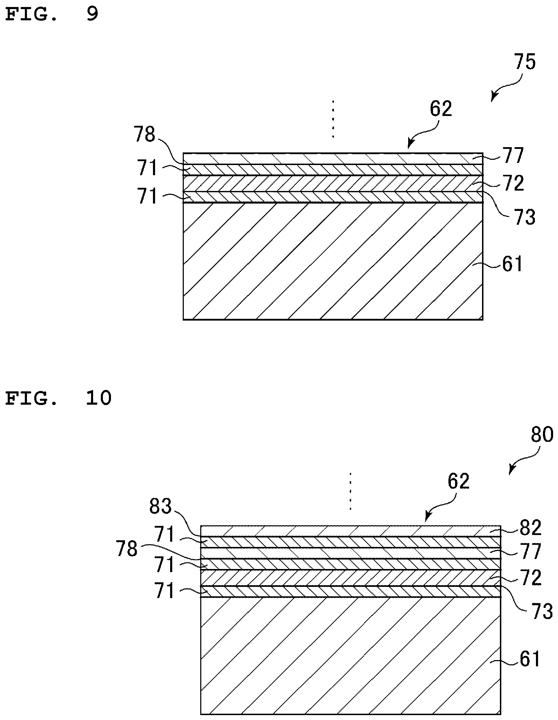

The hydrogen heating device for a blast furnace 11 may include a heat generating element 75 shown in Fig. 9 instead of the heat generating element 14. In the heat generating element 75 as shown in Fig. 9, a multilayer film 62 of a stacked body further has a third layer 77 in addition to the first layer 71 and the second layer 72. The third layer 77 is made of a hydrogen storage metal, a hydrogen storage alloy, or ceramics different from the first layer 71 and the second layer 72. A thickness of the third layer 77 is preferably less than 1000 nm. In Fig. 9, the first layer 71, the second layer 72, and the third layer 77 are stacked on the front surface of the support 61 in order of the first layer 71, the second layer 72, the first layer 71, and the third layer 77. The first layer 71, the second layer 72, and the third layer 77 may be stacked on the front surface of the support 61 in order of the first layer 71, the third layer 77, the first layer 71, and the second layer 72. That is, the multilayer film 62 has a stacking structure in which the first layer 71 is provided between the second layer 72 and the third layer 77. The multilayer film 62 preferably has one or more third layers 77. Similarly to the heterogeneous material interface 73, the hydrogen atoms permeate through a heterogeneous material interface 78 formed between the first layer 71 and the third layer 77.

The third layer 77 is made of, for example, any one of Ni, Pd, Cu, Cr, Fe, Mg, Co, an alloy thereof, SiC, CaO, Y₂O₃, TiC, LaB₆, SrO, and BaO. An alloy for forming the third layer 77 is preferably an alloy made of two or more of Ni, Pd, Cu, Cr, Fe, Mg, and Co. The alloy for forming the third layer 77 may be an alloy obtained by adding an additive element to Ni, Pd, Cu, Cr, Fe, Mg, and Co.

In particular, the third layer 77 is preferably made of any one of CaO, Y₂O₃, TiC, LaB₆, SrO, and BaO. In the heat generating element 75 having the third layer 77 made of any one of CaO, Y₂O₃, TiC, LaB₆, SrO, and BaO, a storage amount of hydrogen is increased, an amount of hydrogen permeating through the heterogeneous material interface 73 and the heterogeneous material interface 78 is increased, and a high output of excess heat can be achieved. The thickness of the third layer 77 made of any one of CaO, Y₂O₃, TiC, LaB₆, SrO, and BaO is preferably 10 nm or less. Accordingly, the hydrogen atoms easily permeate through the multilayer film 62. The third layer 77 made of any one of CaO, Y₂O₃, TiC, LaB₆, SrO, and BaO may not be formed into a complete film shape and may be formed into an island shape. The first layer 71 and the third layer 77 are preferably formed continuously in a vacuum state. Accordingly, between the first layer 71 and the third layer 77, a natural oxide film is not formed and only the heterogeneous material interface 78 is formed.

A combination of the first layer 71, the second layer 72, and the third layer 77 is preferably Pd-CaO-Ni, Pd-Y₂O₃-Ni, Pd-TiC-Ni, Pd-LaB₆-Ni, Ni-CaO-Cu, Ni-Y₂O₃-Cu, Ni-TiC-Cu, Ni-LaB₆-Cu, Ni-Co-Cu, Ni-CaO-Cr, Ni-Y₂O₃-Cr, Ni-TiC-Cr, Ni-LaB₆-Cr, Ni-CaO-Fe, Ni-Y₂O₃-Fe, Ni-TiC-Fe, Ni-LaB₆-Fe, Ni-Cr-Fe, Ni-CaO-Mg, Ni-Y₂O₃-Mg, Ni-TiC-Mg, Ni-LaB₆-Mg, Ni-CaO-Co, Ni-Y₂O₃-Co, Ni-TiC-Co, Ni-LaB₆-Co, Ni-CaO-SiC, Ni-Y₂O₃-SiC, Ni-TiC-SiC, and Ni-LaB₆-SiC when types of elements are expressed as "first layer 71-third layer 77-second layer 72".

### [Fourth Modification]

The hydrogen heating device for a blast furnace 11 may include a heat generating element 80 shown in Fig. 10 instead of the heat generating element 14. In the heat generating element 80 as shown in Fig. 10, a multilayer film 62 of a stacked body further has a fourth layer 82 in addition to the first layer 71, the second layer 72, and the third layer 77. The fourth layer 82 is made of a hydrogen storage metal, a hydrogen storage alloy, or ceramics different from the first layer 71, the second layer 72, and the third layer 77. A thickness of the fourth layer 82 is preferably less than 1000 nm. In Fig. 10, the first layer 71, the second layer 72, the third layer 77, and the fourth layer 82 are stacked on the front surface of the support 61 in order of the first layer 71, the second layer 72, the first layer 71, the third layer 77, the first layer 71, and the fourth layer 82. The first layer 71, the second layer 72, the third layer 77, and the fourth layer 82 may be stacked on the front surface of the support 61 in order of the first layer 71, the fourth layer 82, the first layer 71, the third layer 77, the first layer 71, and the second layer 72. That is, the multilayer film 62 has a stacking structure in which the second layer 72, the third layer 77, and the fourth layer 82 are stacked in any order and the first layer 71 is provided between the second layer 72 and the third layer 77 and between the third layer 77 and the fourth layer 82, and between the second layer 72 and the fourth layer 82. The multilayer film 62 preferably has one or more fourth layers 82. Similarly to the heterogeneous material interface 73 and the heterogeneous material interface 78, the hydrogen atoms permeate through a heterogeneous material interface 83 formed between the first layer 71 and the fourth layer 82.

The fourth layer 82 is made of, for example, any one of Ni, Pd, Cu, Cr, Fe, Mg, Co, an alloy thereof, SiC, CaO, Y₂O₃, TiC, LaB₆, SrO, and BaO. An alloy for forming the fourth layer 82 is preferably an alloy made of two or more of Ni, Pd, Cu, Cr, Fe, Mg, and Co. The alloy for forming the fourth layer 82 may be an alloy obtained by adding an additive element to Ni, Pd, Cu, Cr, Fe, Mg, and Co.

In particular, the fourth layer 82 is preferably made of any one of CaO, Y₂O₃, TiC, LaB₆, SrO, and BaO. In the heat generating element 80 having the fourth layer 82 made of any one of CaO, Y₂O₃, TiC, LaB₆, SrO, and BaO, a storage amount of hydrogen is increased, an amount of hydrogen permeating through the heterogeneous material interface 73, the heterogeneous material interface 78, and the heterogeneous material interface 83 is increased, and a high output of excess heat can be achieved. A thickness of the fourth layer 82 made of any one of CaO, Y₂O₃, TiC, LaB₆, SrO, and BaO is preferably 10 nm or less. Accordingly, the hydrogen atoms easily permeate through the multilayer film 62. The fourth layer 82 made of any one of CaO, Y₂O₃, TiC, LaB₆, SrO, and BaO may not be formed into a complete film shape and may be formed into an island shape. The first layer 71 and the fourth layer 82 are preferably formed continuously in a vacuum state. Accordingly, between the first layer 71 and the fourth layer 82, no natural oxide film is formed and only the heterogeneous material interface 83 is formed.

A combination of the first layer 71, the second layer 72, the third layer 77, and the fourth layer 82 is preferably Ni-CaO-Cr-Fe, Ni-Y₂O₃-Cr-Fe, Ni-TiC-Cr-Fe, and Ni-LaB₆-Cr-Fe when types of elements are expressed as "first layer 71-fourth layer 82-third layer 77-second layer 72".

The heat generating element may have a configuration in which any two or more of the stacked body 14a of the heat generating element 14 shown in Fig. 3, the stacked body of the heat generating element 75 shown in Fig. 9, and the stacked body of the heat generating element 80 shown in Fig. 10 are mixed, and a plurality of types of stacked bodies are stacked alternately or in a random order. A configuration of the multilayer film 62 such as a ratio of layer thicknesses, the number of layers of each layer, and a material may be appropriately changed according to a temperature to be used. Hereinafter, an example of the configuration of the multilayer film 62 corresponding to a temperature will be described after describing a "relationship between a ratio of layer thicknesses of the multilayer film and the excess heat", a "relationship between the number of layers of the multilayer film and the excess heat", and a "relationship between a material of the multilayer film and the excess heat".

The "relationship between a ratio of layer thicknesses of the multilayer film and the excess heat", the "relationship between the number of layers of the multilayer film and the excess heat", and the "relationship between a material of the multilayer film and the excess heat" were examined by preparing an experimental hydrogen heating device for a blast furnace (not shown) and performing, by using the experimental hydrogen heating device for a blast furnace, an experiment to test whether the heat generating element including one stacked body generates the excess heat. The experimental hydrogen heating device for a blast furnace includes a sealed container, two heat generating elements provided inside the sealed container, and a heater that heats the heat generating elements. The heat generating element is formed into a plate shape. The heater is a ceramic heater formed into a plate shape, and includes a built-in thermocouple. The heater is provided between the two heat generating elements. The sealed container is connected to a hydrogen-based gas supply path and an evacuation path. The hydrogen-based gas supply path connects the sealed container and a gas cylinder that stores the hydrogen-based gas. The hydrogen-based gas supply path is provided with an adjustment valve or the like for adjusting a supply amount of the hydrogen-based gas stored in the gas cylinder to the sealed container. The evacuation path connects the sealed container and a dry pump for vacuum evacuating an inside of the sealed container. The evacuation path is provided with an adjustment valve for adjusting an evacuation amount of the gas or the like.

The experimental hydrogen heating device for a blast furnace generates the excess heat from the heat generating element by alternately repeating the hydrogen occluding step and the hydrogen discharging step. That is, the experimental hydrogen heating device for a blast furnace occludes hydrogen in the heat generating element by performing the hydrogen occluding step, and then discharges the hydrogen occluded in the heat generating element by performing the hydrogen discharging step. In the hydrogen occluding step, the hydrogen-based gas is supplied into the sealed container. In the hydrogen discharging step, the inside of the sealed container is vacuum evacuated and the heat generating element is heated.

The "relationship between a ratio of layer thicknesses of the multilayer film and the excess heat" will be described. First, focusing on one stacked body 14a, a relationship between the excess heat and a ratio of a thickness of the first layer 71 to a thickness of the second layer 72 was examined by using the heat generating element 14 including the support 61 made of Ni and the multilayer film 62 having the first layer 71 made of Cu and the second layer 72 made of Ni. Hereinafter, the ratio of the layer thicknesses of the multilayer film 62 is referred to as Ni:Cu.

Eight types of the heat generating elements 14 in which the multilayer film 62 was formed under the same conditions except for the ratio Ni:Cu were prepared and used as Experimental Examples 1 to 8. The multilayer film 62 was provided only on the front surface of the support 61. Ratios Ni:Cu in the heat generating elements 14 according to Experimental Examples 1 to 8 are respectively 7:1, 14:1, 4.33:1, 3:1, 5:1, 8:1, 6:1, and 6.5:1. In each of the heat generating elements 14 according to Experimental Examples 1 to 8, the multilayer film 62 is formed by repeating the stacking configuration having the first layer 71 and the second layer 72. In each of the heat generating elements 14 according to Experimental Examples 1 to 8, the number of layers in the stacking configuration of the multilayer film 62 (hereinafter, referred to as the number of layers of the multilayer film) was 5. A thickness of the entire multilayer film 62 in each of the heat generating elements 14 according to Experimental Examples 1 to 8 was substantially the same.

Each of the heat generating elements 14 according to Experimental Examples 1 to 8 was provided inside a sealed container of an experimental hydrogen heating device for a blast furnace, and the hydrogen occluding step and the hydrogen discharging step were alternately repeated. A protium gas (manufactured by Numata Oxygen Co., grade 2, purity: 99.999 vol% or more) was used as a hydrogen-based gas. In the hydrogen occluding step, the hydrogen-based gas was supplied into the sealed container at about 50 Pa. The time for occluding hydrogen in the heat generating element 14 was about 64 hours. Before the hydrogen occluding step, first, the inside of the sealed container was baked by a heater at about 200°C or higher for 36 hours to remove water and the like adhered to the front surface of the heat generating element 14.

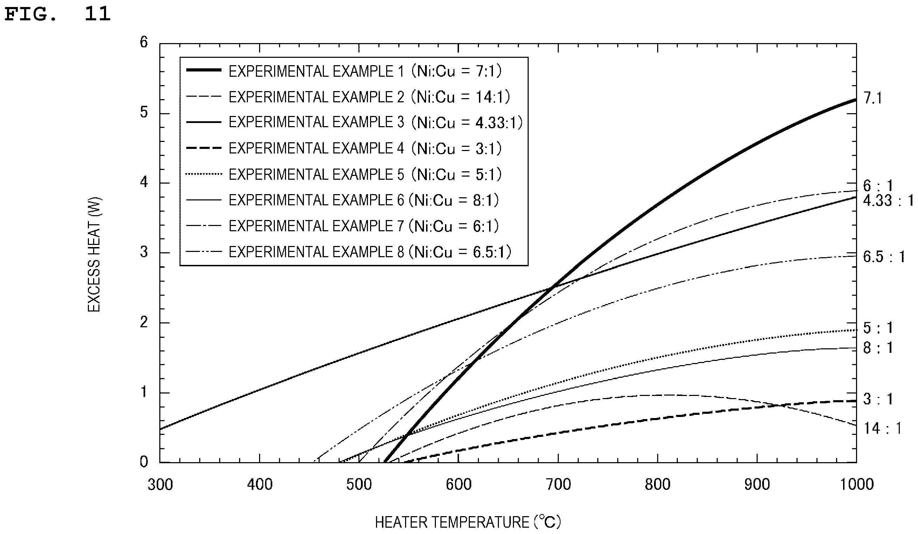

Hydrogen discharging steps were performed with input electric power of the heater of 9 W, 18 W, and 27 W, and hydrogen occluding steps were performed between the hydrogen discharging steps. Then, the temperature of the heat generating element 14 in each of the hydrogen discharging steps was measured by using the thermocouple built in the heater. Results are shown in Fig. 11. Fig. 11 is a graph obtained by fitting measured data by a predetermined method. In Fig. 11, a horizontal axis indicates a heater temperature and a vertical axis indicates electric power of the excess heat. The heater temperature is the temperature of the heat generating element 14 at predetermined input electric power. In Fig. 11, Experimental Example 1 was expressed as "Ni:Cu = 7:1", Experimental Example 2 was expressed as "Ni:Cu = 14:1", Experimental Example 3 was expressed as "Ni:Cu = 4.33:1", Experimental Example 4 was expressed as "Ni:Cu = 3:1", Experimental Example 5 was expressed as "Ni:Cu = 5:1", Experimental Example 6 was expressed as "Ni:Cu = 8:1", Experimental Example 7 was expressed as "Ni:Cu = 6:1", and Experimental Example 8 was expressed as "Ni:Cu = 6.5:1".

From Fig. 11, it was confirmed that the excess heat was generated in all of the heat generating elements 14 according to Experimental Examples 1 to 8. Therefore, it was confirmed that the hydrogen-based gas can be heated when the hydrogen-based gas permeates through the heat generating element 14 including one stacked body 14a. If the heat generating element 14 is obtained by stacking a plurality of such stacked bodies 14a, a distance for the hydrogen-based gas to permeate through the stacked body 14a generating the excess heat increases, and thus the time for heating the hydrogen-based gas increases accordingly, and the temperature of the hydrogen-based gas can be raised. Therefore, it was found that by changing the number of the stacked bodies 14a in the heat generating element 14, the temperature of the hydrogen-based gas after finally permeating through the heat generating elements 14 can be adjusted.

When comparing the heat generating elements 14 according to Experimental Examples 1 to 8 at a heater temperature of 700°C or higher, it is found that the heat generating element 14 according to Experimental Example 1 generates the largest excess heat. When comparing the heat generating element according to Experimental Example 3 with the heat generating elements 14 according to Experimental Examples 1, 2, and 4 to 8, it is found that the heat generating element according to Experimental Example 3 generates excess heat in a wide range in which the heater temperature is 300°C or higher and 1000°C or lower. It is found that the excess heat increases as the heater temperature increases in the heat generating elements 14 according to Experimental Examples 1 and 3 to 8 in which Ni:Cu of the multilayer film 62 is 3:1 to 8:1. It is found that the excess heat decreases at a heater temperature of 800°C or higher in the heat generating element 14 according to Experimental Example 2 in which Ni:Cu of the multilayer film 62 is 14:1. Thus, it is considered that the excess heat does not simply increase with respect to the ratio of Ni to Cu due to a quantum effect of hydrogen in the multilayer film 62.

Next, the "relationship between the number of layers of the multilayer film and the excess heat" will be described. A relationship between the number of layers of the multilayer film 62 and the excess heat was examined by using the heat generating element 14 including one stacked body 14a including the support 61 made of Ni and the multilayer film 62 having the first layer 71 made of Cu and the second layer 72 made of Ni.

Eight types of the heat generating elements 14 (heat generating elements 14 including one stacked body 14a) in which the multilayer film 62 was manufactured under the conditions same as the conditions for manufacturing the heat generating element 14 according to Experimental Example 1 except for the number of layers of the multilayer film 62 were prepared and used as Experimental Examples 9 to 16. The number of layers of the multilayer films 62 of the heat generating elements 14 according to Experimental Examples 1 and 9 to 16 is respectively 5, 3, 7, 6, 8, 9, 12, 4, and 2.

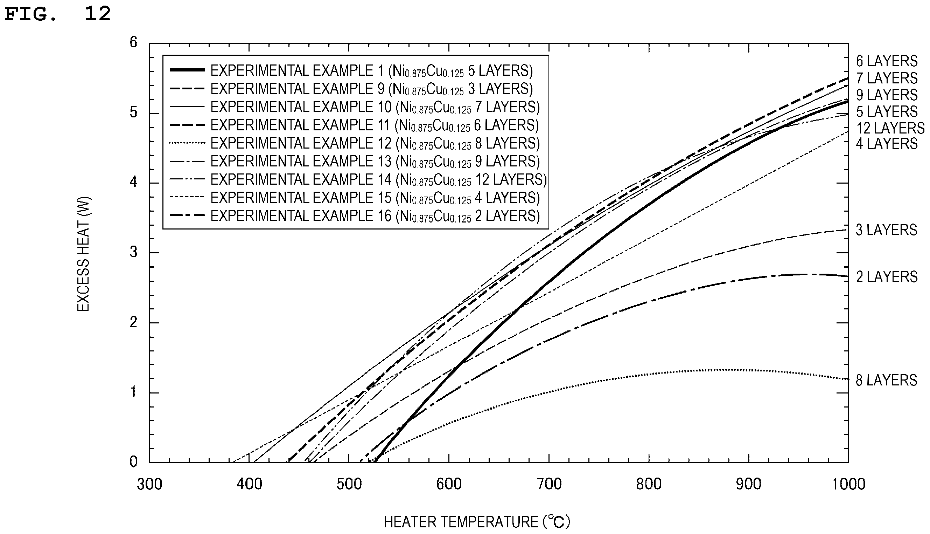

Each of the heat generating elements 14 according to Experimental Examples 1 and 9 to 16 was provided inside a sealed container of an experimental hydrogen heating device for a blast furnace. The experimental hydrogen heating device for a blast furnace is the same as the device used to examine the above-described "relationship between a ratio of layer thicknesses of the multilayer film and the excess heat". In the experimental hydrogen heating device for a blast furnace, the temperature of each of the heat generating elements 14 during the hydrogen discharging step was measured by the same method as that for the above-described "relationship between a ratio of layer thicknesses of the multilayer film and the excess heat". Results are shown in Fig. 12. Fig. 12 is a graph obtained by fitting measured data by a predetermined method. In Fig. 12, a horizontal axis indicates a heater temperature and a vertical axis indicates electric power of the excess heat. In Fig. 12, based on the layer thicknesses, Experimental Example 1 was expressed as "Ni_{0.875}Cu_{0.125} 5 layers", Experimental Example 9 was expressed as "Ni_{0.875}Cu_{0.125} 3 layers", Experimental Example 10 was expressed as "Ni_{0.875}Cu_{0.125} 7 layers", Experimental Example 11 was expressed as "Ni_{0.875}Cu_{0.125} 6 layers", Experimental Example 12 was expressed as "Ni_{0.875}Cu_{0.125} 8 layers", Experimental Example 13 was expressed as "Ni_{0.875}Cu_{0.125} 9 layers", Experimental Example 14 was expressed as "Ni_{0.875}Cu_{0.125} 12 layers", Experimental Example 15 was expressed as "Ni_{0.875}Cu_{0.125} 4 layers", and Experimental Example 16 was expressed as "Ni_{0.875}Cu_{0.125} 2 layers".

From Fig. 12, it was confirmed that the excess heat was generated in all of the heat generating elements 14 according to Experimental Examples 1, 9 to 16. When comparing the heat generating elements 14 according to Experimental Examples 1 and 9 to 16 at a heater temperature of 840°C or higher, it is found that the excess heat in Experimental Example 11 in which the number of layers of the multilayer film 62 is 6 is largest and the excess heat in Experimental Example 12 in which the number of layers of the multilayer film 62 is 8 is smallest. Thus, it is considered that the excess heat does not simply increase with respect to the number of layers of the multilayer film 62 since a wavelength of a behavior as a hydrogen wave in the multilayer film 62 is in a nanometer order and interferes with the multilayer film 62.

Next, the "relationship between a material of the multilayer film and the excess heat" will be described. The relationship between a type of a material for forming the third layer 77 and the excess heat was examined by using the heat generating element 75 including one stacked body including the multilayer film 62 having the first layer 71 made of Ni, the second layer 72 made of Cu, and the third layer 77 made of a hydrogen storage metal, a hydrogen storage alloy, or ceramics different from the materials of the first layer 71 and the second layer 72.

Nine types of the heat generating elements 75 in which the multilayer film 62 was formed under the same conditions except for types of the material for forming the third layer 77 were prepared and used as Experimental Examples 17 to 25. The types of the material for forming the third layer 77 in the heat generating elements 75 according to Experimental Examples 17 to 25 are respectively CaO, SiC, Y₂O₃, TiC, Co, LaB₆, ZrC, TiB₂, and CaOZrO.

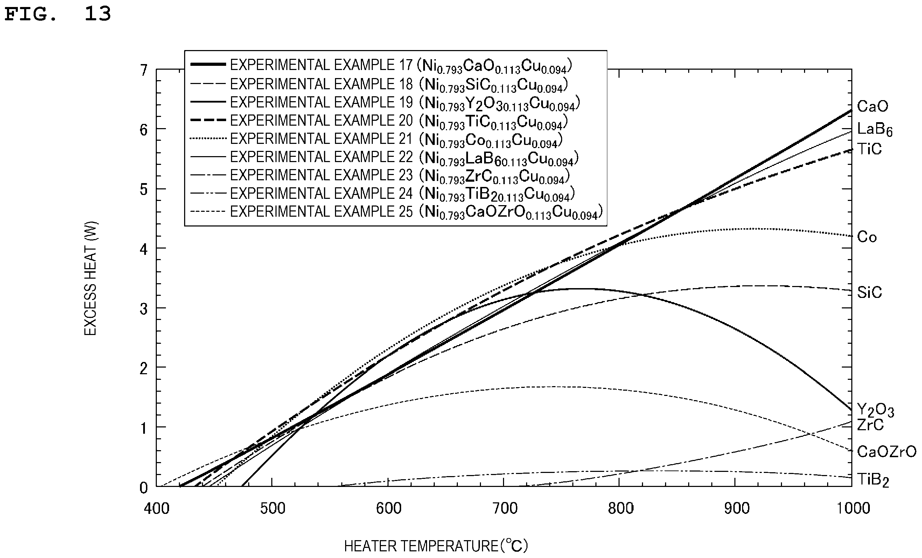

Each of the heat generating elements 75 according to Experimental Examples 17 to 25 was provided inside a sealed container of an experimental hydrogen heating device for a blast furnace. The experimental hydrogen heating device for a blast furnace is the same as the device used to examine the above-described "relationship between a ratio of layer thicknesses of the multilayer film and the excess heat". In the experimental hydrogen heating device for a blast furnace, the temperature of each of the heat generating elements 75 during the hydrogen discharging step was measured by the same method as that for the above-described "relationship between a ratio of layer thicknesses of the multilayer film and the excess heat". Results are shown in Fig. 13. Fig. 13 is a graph obtained by fitting measured data by a predetermined method. In Fig. 13, a horizontal axis indicates a heater temperature and a vertical axis indicates electric power of the excess heat. In Fig. 13, based on the layer thicknesses, Experimental Example 17 was expressed as "Ni_{0.793}CaO_{0.113}Cu_{0.094}", Experimental Example 18 was expressed as "Ni_{0.793}SiC_{0.113}Cu_{0.094}", Experimental Example 19 was expressed as "Ni_{0.793}Y₂O_{30.113}Cu_{0.094}", Experimental Example 20 was expressed as "Ni_{0.793}TiC_{0.113}Cu_{0.094}", Experimental Example 21 was expressed as "Ni_{0.793}Co_{0.113}Cu_{0.094}", Experimental Example 22 was expressed as "Ni_{0.793}LaB_{60.113}Cu_{0.094}", Experimental Example 23 was expressed as "Ni_{0.793}ZrC_{0.113}Cu_{0.094}", Experimental Example 24 was expressed as "Ni_{0.793}TiB_{20.113}Cu_{0.094}", and Experimental Example 25 was expressed as "Ni_{0.793}CaOZrO_{0.113}Cu_{0.094}".

From Fig. 13, it was confirmed that the excess heat was generated in all of the heat generating elements 75 according to Experimental Examples 17 to 25. Therefore, it was confirmed that the hydrogen-based gas can be heated when the hydrogen-based gas permeates through the heat generating element 75 including one stacked body. If the heat generating element 75 is obtained by stacking a plurality of such stacked bodies, a distance for the hydrogen-based gas to permeate through the stacked body generating the excess heat increases, and thus the time for heating the hydrogen-based gas increases accordingly, and the temperature of the hydrogen-based gas can be raised. Therefore, it was found that by changing the number of the stacked bodies in the heat generating element 75, the temperature of the hydrogen-based gas after finally permeating through the heat generating element 75 can be adjusted.

In particular, when comparing Experimental Example 17 in which the material for forming the third layer 77 is CaO, Experimental Example 20 in which the material for forming the third layer 77 is TiC, and Experimental Example 22 in which the material for forming the third layer 77 is LaB₆ with Experimental Examples 18, 19, 21, and 23 to 25, it is found that the excess heat increases in a substantially linear manner in a wide range in which the heater temperature is 400°C or higher and 1000°C or lower. The materials for forming the third layers 77 in Experimental Examples 17, 20, and 22 have a work function smaller than those of the materials in Experimental Examples 18, 19, 21, and 23 to 25. Therefore, it is found that the type of the material for forming the third layer 77 preferably has a small work function. Based on the results, an electron density in the multilayer film 62 may contribute to a heat generating reaction.

An example of the configuration of the multilayer film 62 corresponding to the temperature of the heat generating element 14 will be described. In consideration of the above-described "relationship between a ratio of layer thicknesses of the multilayer film and the excess heat" of the heat generating element 14, when the temperature of the heat generating element 14 is a low temperature (for example, in a range of 50°C or higher and 500°C or lower), the ratio of the layer thicknesses of the multilayer film 62 is preferably in a range of 2:1 or more and 5:1 or less. When the temperature of the heat generating element 14 is an intermediate temperature (for example, in a range of 500°C or higher and 800°C or lower), the ratio of the layer thicknesses of the multilayer film 62 is preferably in a range of 5:1 or more and 6:1 or less. When the temperature of the heat generating element 14 is a high temperature (for example, in a range of 800°C or higher and 1000°C or lower), the ratio of the layer thicknesses of the multilayer film 62 is preferably in a range of 6:1 or more and 12:1 or less.

In consideration of the above-described "relationship between the number of layers of the multilayer film and the excess heat", when the temperature of the heat generating element 14 is any one of the low temperature, the intermediate temperature, and the high temperature, the number of layers of the first layer 71 of the multilayer film 62 is preferably in a range of 2 layers or more and 18 layers or less, and the number of layers of the second layer 72 is preferably in a range of 2 layers or more and 18 layers or less.

In consideration of the above-described "relationship between a material of the multilayer film and the excess heat" of the heat generating element 75, when the temperature of the heat generating element 75 is the low temperature, the first layer 71 is preferably made of Ni, the second layer 72 is preferably made of Cu, and the third layer 77 is preferably made of Y₂O₃. When the temperature of the heat generating element 75 is the intermediate temperature, the first layer 71 is preferably made of Ni, the second layer 72 is preferably made of Cu, and the third layer 77 is preferably made of TiC. When the temperature of the heat generating element 75 is the high temperature, the first layer 71 is preferably made of Ni, the second layer 72 is preferably made of Cu, and the third layer 77 is preferably made of CaO or LaB₆.

### [Fifth Modification]

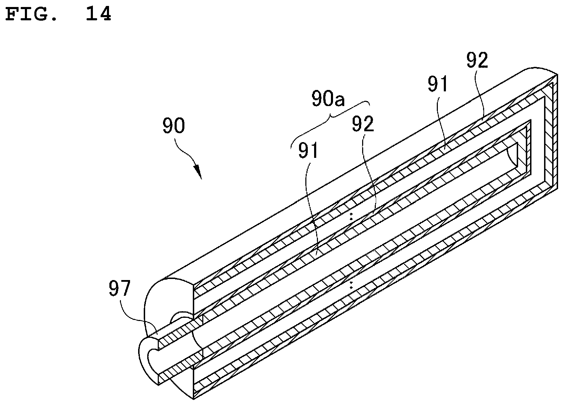

Fig. 14 is a cross-sectional view showing a heat generating element 90 formed into a bottomed cylindrical shape having one open end and the other closed end. A plurality of stacked bodies 90a each including a support 91 and a multilayer film 92 are provided in the heat generating element 90. In this case, in each of the stacked bodies 90a, the multilayer film 92 is formed along an outer peripheral surface and an outer bottom surface of the support 91 formed into a bottomed cylindrical shape having one open end and the other closed end, and the multilayer film 92 is also formed into a bottomed cylindrical shape having one open end and the other closed end.

The heat generating element 90 has a configuration in which the support 91 of the stacked body 90a at an outer side is provided along an outer peripheral surface and an outer bottom surface of the multilayer film 92 of the stacked body 90a at an inner side, and the supports 91 and the multilayer films 92 are alternately stacked in order from an inner surface side to an outer surface side, such as the support 91, the multilayer film 92, the support 91, and the multilayer film 92. In this manner, the plurality of stacked bodies 90a having a bottomed cylindrical shape are stacked in the heat generating element 90, and the number of the stacked bodies 90a is set such that the hydrogen-based gas permeating through the heat generating element 90 is heated to a predetermined temperature.

Each of the supports 91 is made of at least one of a porous body, a hydrogen permeable film, and a proton conductor. Each of the multilayer films 92 has a first layer (not shown) made of a hydrogen storage metal or a hydrogen storage alloy and having a thickness of less than 1000 nm, and a second layer (not shown) made of a hydrogen storage metal or a hydrogen storage alloy different from the first layer, or ceramics and having a thickness of less than 1000 nm. Although the heat generating element 90 is formed into a bottomed cylindrical shape in Fig. 14, the heat generating element 90 may be formed into a bottomed polygonal cylindrical shape.

An example of a method for manufacturing the heat generating element 90 will be described. The heat generating element 90 is manufactured by preparing the support 91 formed into a bottomed cylindrical shape, and forming the multilayer film 92 on the support 91 by using a wet film forming method. In the present modification, the multilayer film 92 is formed on an outer surface of the support 91. Accordingly, the innermost stacked body 90a having a bottomed cylindrical shape is formed. Next, another support 91 formed into a sheet shape is prepared, and a multilayer film 92 is formed on an outer surface of the support 91 having a sheet shape by using the wet film forming method to form a new stacked body 90a having a bottomed cylindrical shape and a sheet shape. By repeatedly stacking the another stacked body 90a having a sheet shape on the outer surface of the innermost stacked body 90a, the heat generating element 90 in which the plurality of stacked bodies 90a are stacked can be manufactured. The supports 91 and the multilayer films 92 are sequentially formed by forming the multilayer film 92 on the outer surface of the innermost support 91 having a bottomed cylindrical shape, and then forming the support 91 having a sheet shape on the outer peripheral surface and a bottom surface of the multilayer film 92, and forming the multilayer film 92 again on the outer peripheral surface and a bottom surface of the support 91.

Examples of the wet film forming method include a spin coating method, a spray coating method, and a dipping method. The multilayer film 92 may be formed by using an atomic layer deposition (ALD) method, or the multilayer film 92 may be formed on the support 91 while rotating the support 91 by using a sputtering device including a rotation mechanism that rotates the support 91. The multilayer film 92 may also be provided on an innermost surface of the support 91, and the multilayer films 92 may be provided on two surfaces of the support 91 located at an innermost periphery.

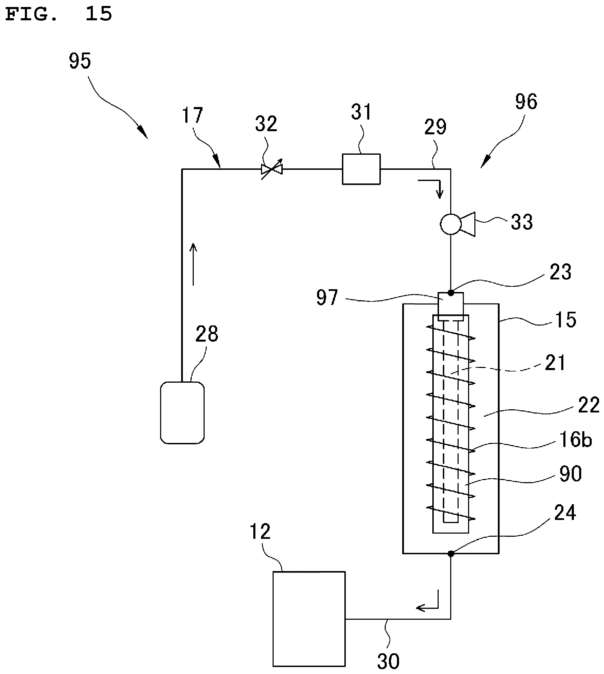

As shown in Fig. 15, blast furnace equipment 95 includes a hydrogen heating device for a blast furnace 96 and the blast furnace 12. The hydrogen heating device for a blast furnace 96 is different from the hydrogen heating device for a blast furnace 11 according to the above-described embodiment in that the heat generating device 96 includes the heat generating element 90 instead of the heat generating element 14. The heat generating element 90 is mounted in the sealed container 15 by using a mounting pipe 97. Although not shown in Fig. 15, the hydrogen heating device for a blast furnace 96 includes a temperature sensor that detects a temperature of the heat generating element 90, a power supply that inputs electric power to the heater 16b, a control unit serving as an output control unit that controls an output of the heater 16b based on the temperature detected by the temperature sensor. The temperature sensor is provided, for example, on an outer surface of the heat generating element 90.

The mounting pipe 97 is made of, for example, stainless steel. The mounting pipe 97 passes through the sealed container 15, one end of the mounting pipe 97 is provided at an outer surface of the sealed container 15, and the other end of the mounting pipe 97 is provided inside the sealed container 15. One end of the mounting pipe 97 is connected to the lead-in line 29 of the hydrogen circulation line 17. The other end of the mounting pipe 97 is provided with the heat generating element 90.

In the fifth modification, the first chamber 21 is defined by an inner surface of the heat generating element 90. The second chamber 22 is defined by the inner surface of the sealed container 15 and the outer surface of the heat generating element 90. Therefore, in the heat generating element 90, the support 91 is provided at the first chamber 21 side (a high pressure side), and the multilayer film 92 is provided at the second chamber 22 side (a low pressure side) (see Fig. 14). Due to the pressure difference generated between the first chamber 21 and the second chamber 22, hydrogen led into the first chamber 21 permeates the inside of the heat generating element 90 sequentially through the support 91, the multilayer film 92, the support 91, the multilayer film 92, and the like, and moves to the second chamber 22. That is, hydrogen permeates through the plurality of stacked bodies 90a stacked in a predetermined number from the inner surface toward the outer surface of the heat generating element 90. Accordingly, each of the stacked bodies 90a of the heat generating element 90 generates the excess heat when hydrogen is discharged from the multilayer film 92. Therefore, the hydrogen heating device for a blast furnace 96 has the same effects as the hydrogen heating device for a blast furnace 11 according to the above-described embodiment.

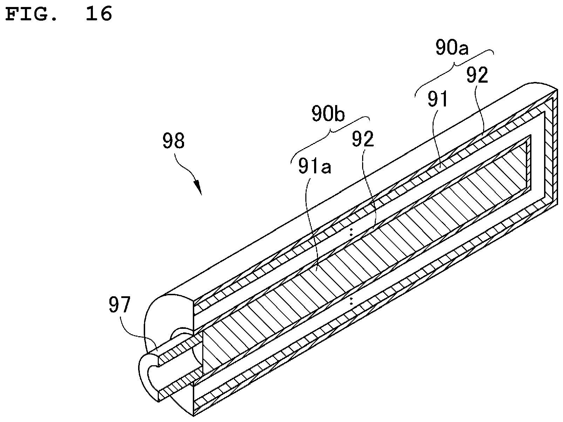

The hydrogen heating device for a blast furnace 96 may include a heat generating element 98 shown in Fig. 16 instead of the heat generating element 90. The heat generating element 98 is different from the heat generating element 90 in that a stacked body 90b at an innermost side includes a support 91a having a columnar shape. Similarly to the support 61, the support 91a is made of at least one of a porous body, a hydrogen permeable film, and a proton conductor. The support 91a improves mechanical strength of the heat generating element 98 while allowing passage of the hydrogen-based gas therethrough. Although the support 91a is formed into a cylindrical columnar shape in Fig. 16, the support 91a may be formed into a polygonal columnar shape. In the above-described fifth modification, a configuration in which the plurality of stacked bodies 90a are stacked is shown, but a configuration including one stacked body 90a may be adopted.

### [Sixth Modification]

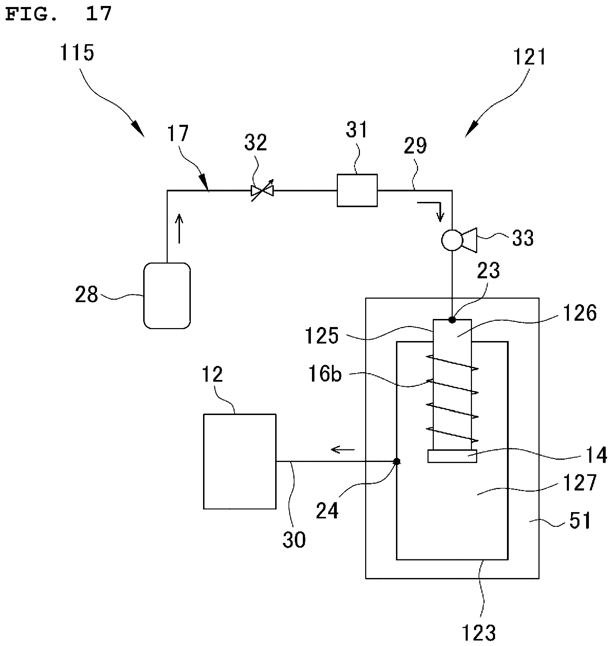

As shown in Fig. 17, blast furnace equipment 115 includes a hydrogen heating device for a blast furnace 121 and the blast furnace 12. The hydrogen heating device for a blast furnace 121 is different from the hydrogen heating device for a blast furnace 11 according to the above-described embodiment in that the hydrogen heating device 121 includes a sealed container 123 instead of the sealed container 15. The sealed container 123 is a hollow container, and accommodates the heat generating element 14 therein. The sealed container 123 is covered with a heat insulation member 51. A mounting pipe 125 for mounting the heat generating element 14 is provided at the sealed container 123.

The mounting pipe 125 is made of, for example, stainless steel. The mounting pipe 125 passes through the sealed container 123, one end of the mounting pipe 125 is provided outside the sealed container 123, and the other end of the mounting pipe 125 is provided inside the sealed container 123. In the present modification, one end of the mounting pipe 125 is provided inside the heat insulation member 51. One end of the mounting pipe 125 is connected to the lead-in line 29 of the hydrogen circulation line 17. The other end of the mounting pipe 125 is provided with the heat generating element 14. The heater 16b of the temperature adjustment unit (not shown) is wound around an outer periphery of the mounting pipe 125.

The sealed container 123 has a first chamber 126 and a second chamber 127 partitioned by the mounting pipe 125 and the heat generating element 14. The first chamber 126 is defined by the front surface of the heat generating element 14 and an inner surface of the mounting pipe 125. The first chamber 126 has the inlet 23 connected to the lead-in line 29. The second chamber 127 is defined by an inner surface of the sealed container 123, the back surface of the heat generating element 14, and an outer surface of the mounting pipe 125. The second chamber 127 has the outlet 24 connected to the lead-out line 30. In Fig. 17, the outlet 24 is provided at a substantially central position of the sealed container 123 in a longitudinal direction thereof. The first chamber 126 is pressurized by leading in the hydrogen-based gas. The second chamber 127 is depressurized by evacuating the hydrogen-based gas. Accordingly, a hydrogen pressure in the first chamber 126 is higher than a hydrogen pressure in the second chamber 127. The first chamber 126 and the second chamber 127 have different hydrogen pressures. Therefore, the inside of the sealed container 123 is in a state in which a pressure difference is generated between two sides of the heat generating element 14.

The heated hydrogen-based gas circulating through the lead-out line 30 is sent into the blast furnace 12 from the tuyere of the blast furnace 12 through the lead-out line 30, and is utilized as the reducing gas in the blast furnace 12, similarly to the above-described embodiment.

As described above, the hydrogen-based gas inside the sealed container 123 permeates from the first chamber 126 inside the mounting pipe 125 to the second chamber 127 through the heat generating element 14 provided at a tip end of the mounting pipe 125, so that the hydrogen heating device for a blast furnace 121 can heat the hydrogen-based gas by heat generated in each of the stacked bodies 14a of the heat generating element 14. In this case, in the hydrogen heating device for a blast furnace 121, by setting the number of the stacked bodies 14a of the heat generating element 14 to a predetermined number in advance, the temperature of the hydrogen-based gas can also be raised to a predetermined temperature, and thus the hydrogen heating device for a blast furnace 121 has the same effects as the hydrogen heating device for a blast furnace 11 according to the above-described embodiment.

### [Seventh Modification]

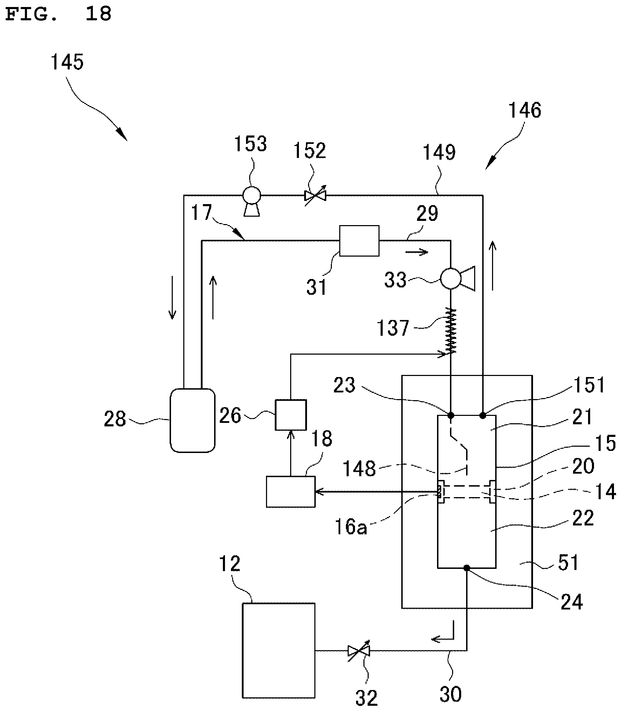

As shown in Fig. 18, blast furnace equipment 145 includes a hydrogen heating device for a blast furnace 146 and the blast furnace 12. In the hydrogen heating device for a blast furnace 146, a heater 137 is provided in the lead-in line 29, and a nozzle portion 148 is provided inside the sealed container 15. The hydrogen heating device for a blast furnace 146 is different from the hydrogen heating device for a blast furnace 11 according to the above-described embodiment in an arrangement position of the heater 137 of the temperature adjustment unit (not shown) and in provision of the nozzle portion 148 and a non-permeated gas recovery line 149 to be described later. The temperature adjustment unit (not shown) includes the temperature sensor 16a, the heater 137, and the control unit 18 serving as an output control unit.

The heater 137 is provided in the lead-in line 29, and heats the heat generating element 14 by heating the hydrogen-based gas circulating through the lead-in line 29. The heater 137 is electrically connected to the power supply 26, and generates heat by inputting electric power from the power supply 26. Input electric power of the power supply 26 is controlled by the control unit 18. The control unit 18 adjusts input electric power to the heater 137 based on the temperature detected by the temperature sensor 16a, thereby maintaining the heat generating element 14 at an appropriate temperature for heat generation.

The hydrogen heating device for a blast furnace 146 includes the heater 137 provided in the lead-in line 29, so that the heated hydrogen-based gas can be sent into the sealed container 15, the heat generating element 14 can be heated by the heated hydrogen-based gas, and the heat generating element 14 can be maintained at an appropriate temperature for heat generation. The hydrogen heating device for a blast furnace 146 having such a configuration also has the same effects as the hydrogen heating device 11 according to the above-described embodiment.

The nozzle portion 148 is provided between the inlet 23 and the heat generating element 14. The nozzle portion 148 is connected to the lead-in line 29 via the inlet 23. The nozzle portion 148 ejects, from an ejection port provided at a nozzle tip end, a hydrogen-based gas that circulates through the lead-in line 29 and from which impurities are removed by the filter 31. A distance between the nozzle tip end and the front surface of the heat generating element 14 is, for example, 1 cm to 2 cm. A direction of the nozzle tip end is perpendicular to the front surface of the heat generating element 14. Accordingly, the nozzle portion 148 ejects the hydrogen-based gas over the entire front surface that is one surface of the heat generating element 14. The distance between the nozzle tip end and the front surface of the heat generating element 14 or the direction of the nozzle tip end is preferably a distance or a direction in which the hydrogen-based gas discharged from the nozzle tip end is blown onto the entire front surface of the heat generating element 14.

The non-permeated gas recovery line 149 is connected to a non-permeated gas recovery port 151 provided in the first chamber 21, and recovers a non-permeated gas that does not permeate through the heat generating element 14 in the hydrogen-based gas led into the first chamber 21. The non-permeated gas recovery line 149 is connected to the hydrogen tank 28, and returns the recovered non-permeated gas to the hydrogen tank 28. The non-permeated gas recovery port 151 is provided side by side with the inlet 23.

In the above configuration, the hydrogen-based gas led into the first chamber 21 sequentially permeates through each of the stacked bodies 14a of the heat generating element 14 and is heated by heat of each of the stacked bodies 14a. The hydrogen-based gas heated by permeating through the heat generating element 14 is led out to the lead-out line 30. The hydrogen-based gas led out to the lead-out line 30 is supplied to the blast furnace 12 through the pressure adjustment valve 32.

On the other hand, the remaining hydrogen-based gas that is led into the first chamber 21 and does not permeate through the heat generating element 14 is recovered by the non-permeated gas recovery line 149 as the non-permeated gas. The non-permeated gas circulates through the non-permeated gas recovery line 149 and returns to the hydrogen tank 28, circulates through the lead-in line 29, and is led into the first chamber 21 again as the hydrogen-based gas. That is, the non-permeated gas recovery line 149 connects the first chamber 21 and the lead-in line 29, recovers the non-permeated gas that does not permeate through the heat generating element 14 in the hydrogen-based gas led in through the lead-in line 29 to the first chamber 21, and returns the non-permeated gas to the lead-in line 29.

The non-permeated gas recovery line 149 includes a non-permeated gas flow rate control unit 152 and a circulation pump 153. The non-permeated gas flow rate control unit 152 includes, for example, a variable leak valve as an adjustment valve. The non-permeated gas flow rate control unit 152 controls a flow rate of the non-permeated gas based on the temperature detected by the temperature sensor 16a. For example, when the temperature of the heat generating element 14 detected by the temperature sensor 16a is higher than an upper limit temperature of the appropriate temperature range for heat generation of the heat generating element 14, the non-permeated gas flow rate control unit 152 increases a circulation flow rate of the non-permeated gas. When the temperature of the heat generating element 14 detected by the temperature sensor 16a is lower than a lower limit temperature of the appropriate temperature range for heat generation of the heat generating element 14, the non-permeated gas flow rate control unit 152 decreases a flow rate of the non-permeated gas. In this manner, the non-permeated gas flow rate control unit 152 maintains the heat generating element 14 at an appropriate temperature for heat generation by increasing or decreasing the circulation flow rate of the non-permeated gas.

The circulation pump 153 recovers the non-permeated gas in the first chamber 21 from the non-permeated gas recovery port 151 and sends the non-permeated gas to the hydrogen tank 28. Examples of the circulation pump 153 include a metal bellows pump. The circulation pump 153 is electrically connected to the control unit 18.

The hydrogen heating device for a blast furnace 146 includes the nozzle portion 148, so that the hydrogen-based gas after the impurities are removed is directly blown onto the front surface of the heat generating element 14. Accordingly, in the hydrogen heating device for a blast furnace 146, impurities on the front surface and a periphery of the heat generating element 14 are blown away and the front surface of the heat generating element 14 is provided under an atmosphere including a fresh hydrogen-based gas from which impurities are removed by the filter 31, and thus a high output of the excess heat can be achieved.

### [Eighth Modification]

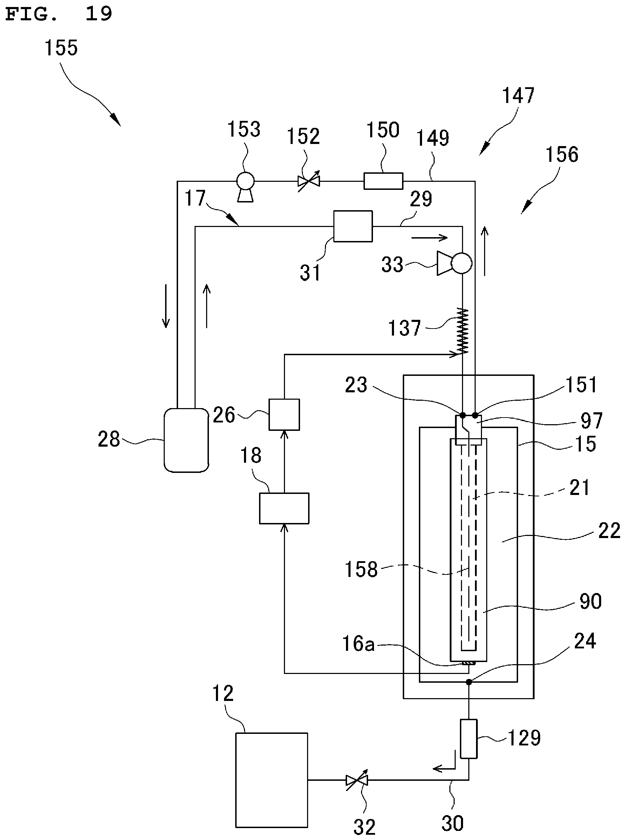

As shown in Fig. 19, blast furnace equipment 155 includes a hydrogen heating device for a blast furnace 156 and the blast furnace 12. The hydrogen heating device for a blast furnace 156 includes the heat generating element 90 instead of the heat generating element 14, and the nozzle portion 158 is provided inside the sealed container 15. In the present modification, the inlet 23 and the non-permeated gas recovery port 151 are provided side by side in the mounting pipe 97.

The nozzle portion 158 is provided between the inlet 23 and the heat generating element 90, one end of the nozzle portion 158 is connected to the inlet 23, and the other end of the nozzle portion 158 extends up to the other end of the heat generating element 90. The nozzle portion 158 is connected to the lead-in line 29 via the inlet 23.

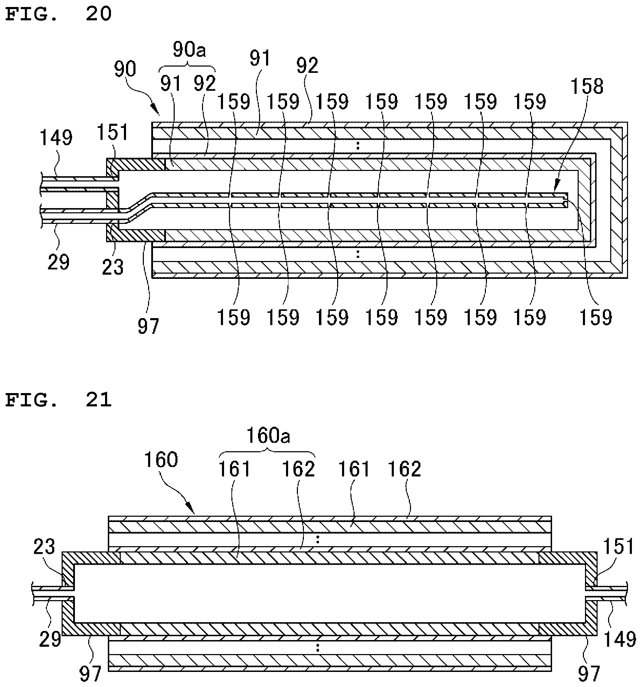

As shown in Fig. 20, a plurality of ejection ports 159 are formed on a peripheral side surface of the nozzle portion 158 having a cylindrical shape along an axial direction of the heat generating element 90. The ejection port 159 is also formed in a bottom surface of the nozzle portion 158 according to the present embodiment. The nozzle portion 158 ejects the hydrogen-based gas from the plurality of ejection ports 159 to the entire inner surface (an inner peripheral surface and an inner bottom surface) of the heat generating element 90. The plurality of ejection ports 159 are preferably arranged at equal intervals. The hydrogen-based gas is uniformly ejected onto the entire inner surface of the heat generating element 90 by arranging the plurality of ejection ports 159 at equal intervals. The number and a diameter of the ejection ports 159 may be changed as appropriate. In the above-described eighth modification, a configuration in which the plurality of stacked bodies 90a are stacked is shown, but a configuration including one stacked body 90a may be adopted.

The heat generating element 90 has a configuration in which the non-permeated gas recovery line 149 is connected to a non-permeated gas recovery port 151 provided in the first chamber 21, and can recover, from the non-permeated gas recovery line 149, the non-permeated gas that does not permeate through the heat generating element 14 in the hydrogen-based gas led into the first chamber 21.

The hydrogen heating device for a blast furnace 156 ejects the hydrogen-based gas from the nozzle portion 158, so that impurities on the inner surface and a periphery of the heat generating element 90 are blown away by the hydrogen-based gas, and the inner side of the heat generating element 90 is in an atmosphere including a fresh hydrogen-based gas from which impurities are removed by the filter 31, and thus a high output of the excess heat can be achieved.

### [Ninth Modification]

Fig. 21 is a cross-sectional view showing a cylindrical heat generating element 160 having two open ends. The heat generating element 160 includes a plurality of stacked bodies 160a each including a support 161 and a multilayer film 162. In this case, each of the stacked bodies 160a has a configuration in which the multilayer film 162 having a cylindrical shape is formed on an outer peripheral surface of the support 161 having a cylindrical shape. In the heat generating element 160, the support 161 of another stacked body 160a is provided on an outer peripheral surface of the multilayer film 162 of one stacked body 160a, and the plurality of stacked bodies 160a are stacked in a predetermined number by sequentially and alternately arranging the support 161 and the multilayer film 162 from the inside to the outside, such as the support 161, the multilayer film 162, the support 161, and the multilayer film 162. In this manner, the plurality of stacked bodies 160a having a cylindrical shape are stacked in the heat generating element 160, and the number of the stacked bodies 160a is set such that the hydrogen-based gas permeating through the heat generating element 160 is heated to a predetermined temperature.

The support 161 is made of at least one of a porous body, a hydrogen permeable film, and a proton conductor. The multilayer film 162 has a first layer (not shown) made of a hydrogen storage metal or a hydrogen storage alloy and having a thickness of less than 1000 nm, and a second layer (not shown) made of a hydrogen storage metal or a hydrogen storage alloy different from the first layer, or ceramics and having a thickness of less than 1000 nm. Since a method for manufacturing the heat generating element 160 is the same as the method for manufacturing the heat generating element 90 except for the preparation of the cylindrical support 161 having two open ends, a description of the method for manufacturing the heat generating element 160 will be omitted. Although the heat generating element 160 is formed into a cylindrical shape having two open ends in Fig. 21, the heat generating element 160 may be formed into a polygonal cylindrical shape having two open ends. In the above-described ninth modification, a configuration in which the plurality of stacked bodies 160a are stacked is shown, but a configuration including one stacked body 160a may be adopted.

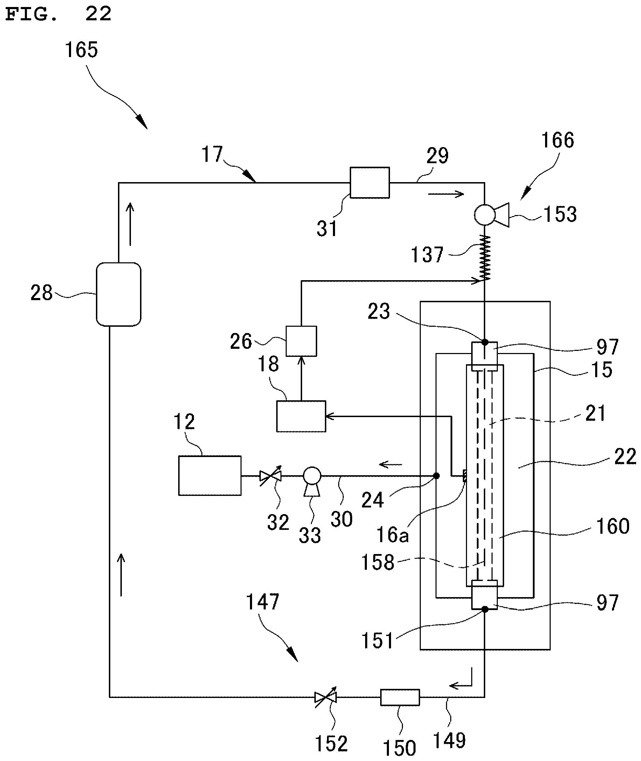

As shown in Fig. 22, blast furnace equipment 165 includes a hydrogen heating device for a blast furnace 166 and the blast furnace 12. The hydrogen heating device for a blast furnace 166 is different from the hydrogen heating device for a blast furnace 156 according to the above-described eighth modification in that the hydrogen heating device for a blast furnace 166 includes the heat generating element 160 instead of the heat generating element 90.

The mounting pipe 97 is provided at two ends of the heat generating element 160. The mounting pipe 97 provided at one end of the heat generating element 160 is connected to the lead-in line 29. The mounting pipe 97 provided at the other end of the heat generating element 160 is connected to the non-permeated gas recovery line 149. That is, one end of the heat generating element 160 is connected to the lead-in line 29, and the other end thereof is connected to the non-permeated gas recovery line 149. Therefore, similarly to the hydrogen heating device for a blast furnace 156 according to the above-described eighth modification, the hydrogen heating device for a blast furnace 166 can recover, from the non-permeated gas recovery line 149, the non-permeated gas that does not permeate through the heat generating element 160 in the hydrogen-based gas led into the first chamber 21.

### [Tenth Modification]

In the above-described embodiment and the above-described modifications, the hydrogen circulation line leads the hydrogen-based gas into the first chamber through the lead-in line and leads out the hydrogen-based gas from the second chamber to the lead-out line, thereby generating a hydrogen pressure difference between the first chamber and the second chamber, but in the tenth modification, instead of using the hydrogen circulation line, a hydrogen storage metal or a hydrogen storage alloy is used to generate the hydrogen pressure difference between the first chamber and the second chamber by utilizing occluding and discharging of hydrogen. Hereinafter, a hydrogen heating device for a blast furnace according to the tenth modification will be described focusing on a point different from the above-described embodiment and modifications.

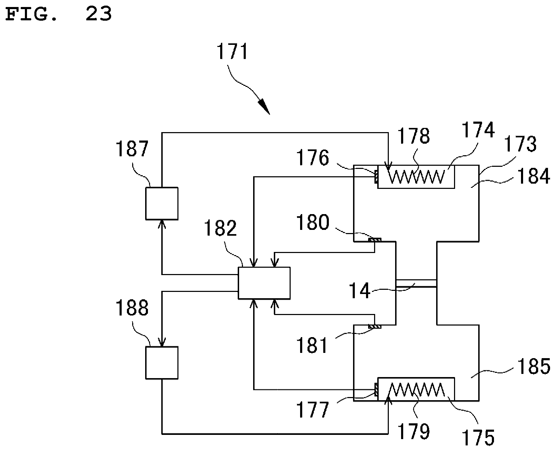

As shown in Fig. 23, a hydrogen heating device for a blast furnace 171 includes the heat generating element 14, a sealed container 173, a first hydrogen occluding and discharging unit 174, a second hydrogen occluding and discharging unit 175, a first temperature sensor 176, a second temperature sensor 177, a first heater 178, a second heater 179, a first pressure gauge 180, a second pressure gauge 181, and a hydrogen pressure control unit 182. The heat generating element 14 may include one stacked body 14a (see Fig. 2), or the heat generating element 14 may have a configuration in which the plurality of stacked bodies 14a are stacked in a predetermined number (see Fig. 6). The hydrogen heating device for a blast furnace 171 further includes a control unit as an output control unit (not shown). The control unit as the output control unit, the first temperature sensor 176, the second temperature sensor 177, the first heater 178, and the second heater 179 form a temperature adjustment unit (not shown). The temperature adjustment unit adjusts the temperature of the heat generating element 14 and maintains the heat generating element 14 at an appropriate temperature for heat generation.

The sealed container 173 has a first chamber 184 and a second chamber 185 partitioned by the heat generating element 14. The first chamber 184 and the second chamber 185 have different hydrogen pressures by performing switching control by the hydrogen pressure control unit 182 to be described later. The first chamber 184 is defined by the front surface of the heat generating element 14 and an inner surface of the sealed container 173. The second chamber 185 is defined by the back surface of the heat generating element 14 and the inner surface of the sealed container 173. Although not shown in Fig. 23, in the sealed container 173, for example, an inlet is provided in the first chamber 184 or the second chamber 185, and a lead-in line for leading in the hydrogen-based gas is connected to the inlet. Similarly, although not shown in Fig. 23, in the sealed container 173, for example, an outlet is provided in the first chamber 184 or the second chamber 185, and a lead-out line for leading out the hydrogen-based gas heated by the heat generating element 14 to the blast furnace is connected to the outlet.

The first hydrogen occluding and discharging unit 174 is provided in the first chamber 184. The first hydrogen occluding and discharging unit 174 is made of a hydrogen storage metal or a hydrogen storage alloy. The first hydrogen occluding and discharging unit 174 occludes and discharges hydrogen. Absorbing and discharging of hydrogen performed by the first hydrogen occluding and discharging unit 174 are sequentially switched by the hydrogen pressure control unit 182 to be described later.

The second hydrogen occluding and discharging unit 175 is provided in the second chamber 185. The second hydrogen occluding and discharging unit 175 is made of a hydrogen storage metal or a hydrogen storage alloy. The second hydrogen occluding and discharging unit 175 occludes and discharges hydrogen. Absorbing and discharging of hydrogen performed by the second hydrogen occluding and discharging unit 175 are sequentially switched by the hydrogen pressure control unit 182 to be described later.

The first temperature sensor 176 is provided in the first hydrogen occluding and discharging unit 174, and detects a temperature of the first hydrogen occluding and discharging unit 174. The second temperature sensor 177 is provided in the second hydrogen occluding and discharging unit 175, and detects a temperature of the second hydrogen occluding and discharging unit 175.

The first heater 178 is provided in the first hydrogen occluding and discharging unit 174, and heats the first hydrogen occluding and discharging unit 174. The first heater 178 is electrically connected to a power supply 187, and generates heat by inputting electric power from the power supply 187. The second heater 179 is provided in the second hydrogen occluding and discharging unit 175, and heats the second hydrogen occluding and discharging unit 175. The second heater 179 is electrically connected to a power supply 188, and generates heat by inputting electric power from the power supply 188.

The first pressure gauge 180 is provided inside the first chamber 184, and detects a hydrogen pressure in the first chamber 184. The second pressure gauge 181 is provided inside the second chamber 185 and detects a hydrogen pressure in the second chamber 185.

The hydrogen pressure control unit 182 is electrically connected to the first temperature sensor 176, the second temperature sensor 177, the first pressure gauge 180, the second pressure gauge 181, the power supply 187, and the power supply 188.

The hydrogen pressure control unit 182 controls the temperature of the first hydrogen occluding and discharging unit 174 based on the temperature detected by the first temperature sensor 176. The hydrogen pressure control unit 182 turns on the power supply 187 and adjusts input electric power to the first heater 178, thereby heating the first hydrogen occluding and discharging unit 174 to a predetermined temperature. The hydrogen pressure control unit 182 turns off the power supply 187, thereby cooling the first hydrogen occluding and discharging unit 174. The first hydrogen occluding and discharging unit 174 may be cooled by using a cooling device (not shown).

The hydrogen pressure control unit 182 controls the temperature of the second hydrogen occluding and discharging unit 175 based on the temperature detected by the second temperature sensor 177. The hydrogen pressure control unit 182 turns on the power supply 188 and adjusts input electric power to the second heater 179, thereby heating the second hydrogen occluding and discharging unit 175 to a predetermined temperature. The hydrogen pressure control unit 182 turns off the power supply 188, thereby cooling the second hydrogen occluding and discharging unit 175. The second hydrogen occluding and discharging unit 175 may be cooled by using a cooling device (not shown).

The hydrogen pressure control unit 182 has a first mode in which the hydrogen pressure in the first chamber 184 is higher than the hydrogen pressure in the second chamber 185, and a second mode in which the hydrogen pressure in the second chamber 185 is higher than the hydrogen pressure in the first chamber 184.

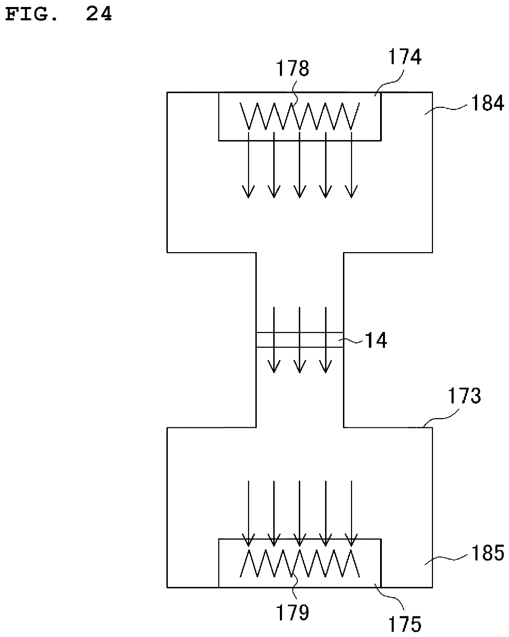

As shown in Fig. 24, in the first mode, the hydrogen pressure control unit 182 heats the first hydrogen occluding and discharging unit 174 by the first heater 178 and cools the second hydrogen occluding and discharging unit 175. The first hydrogen occluding and discharging unit 174 is heated to discharge hydrogen. The first chamber 184 is pressurized by discharging hydrogen from the first hydrogen occluding and discharging unit 174. On the other hand, the second hydrogen occluding and discharging unit 175 is cooled to occlude hydrogen. The second chamber 185 is depressurized by occluding hydrogen to the second hydrogen occluding and discharging unit 175. As a result, the hydrogen pressure in the first chamber 184 is higher than the hydrogen pressure in the second chamber 185. Hydrogen in the first chamber 184 permeates through the heat generating element 14 and moves to the second chamber 185 due to a hydrogen pressure difference generated between the first chamber 184 and the second chamber 185. The heat generating element 14 generates the excess heat by permeation of hydrogen.

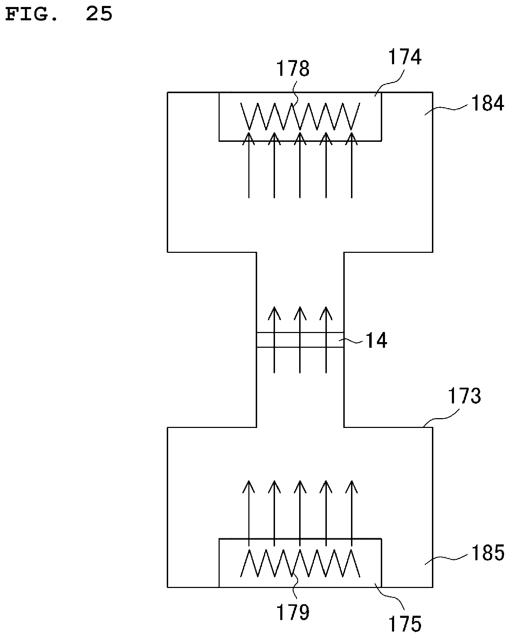

As shown in Fig. 25, in the second mode, the hydrogen pressure control unit 182 cools the first hydrogen occluding and discharging unit 174 and heats the second hydrogen occluding and discharging unit 175 by the second heater 179. The first hydrogen occluding and discharging unit 174 is cooled to occlude hydrogen. The first chamber 184 is depressurized by occluding hydrogen to the first hydrogen occluding and discharging unit 174. On the other hand, the second hydrogen occluding and discharging unit 175 is heated to discharge hydrogen. The second chamber 185 is pressurized by discharging hydrogen from the second hydrogen occluding and discharging unit 175. As a result, the hydrogen pressure in the second chamber 185 is higher than the hydrogen pressure in the first chamber 184. Hydrogen in the second chamber 185 permeates through the heat generating element 14 and moves to the first chamber 184 due to a hydrogen pressure difference generated between the first chamber 184 and the second chamber 185. The heat generating element 14 generates the excess heat by permeation of hydrogen.

The hydrogen pressure control unit 182 performs switching control to switch between the first mode and the second mode. An example of the switching control will be described. The hydrogen pressure control unit 182 switches from the first mode to the second mode when the pressure detected by the first pressure gauge 180 is equal to or lower than a predetermined threshold in the first mode. The hydrogen pressure control unit 182 switches from the second mode to the first mode when the pressure detected by the second pressure gauge 181 is equal to or lower than a predetermined pressure in the second mode. The hydrogen pressure control unit 182 performs the switching control between the first mode and the second mode, thereby switching directions in which hydrogen permeates through the heat generating element 14 obtained by stacking the predetermined number of the stacked bodies 14a to intermittently continue the generation of excess heat in the heat generating element 14.

Therefore, in this case, by setting the number of the stacked bodies of the heat generating element 14, the hydrogen-based gas can be heated to a predetermined temperature by the heat generating element 14, and thus the hydrogen heating device for a blast furnace 171 also has the same effects as the hydrogen heating device for a blast furnace 11 according to the above-described embodiment. Since a hydrogen pressure difference can be generated between the first chamber and the second chamber without using a hydrogen circulation line, miniaturization of the hydrogen heating device for a blast furnace 171 can be achieved.

### [Eleventh Modification]

Although one heat generating element is used in each of the hydrogen heating devices for blast furnaces according to the above-described embodiment and the above-described modifications, a plurality of heat generating elements may be used.

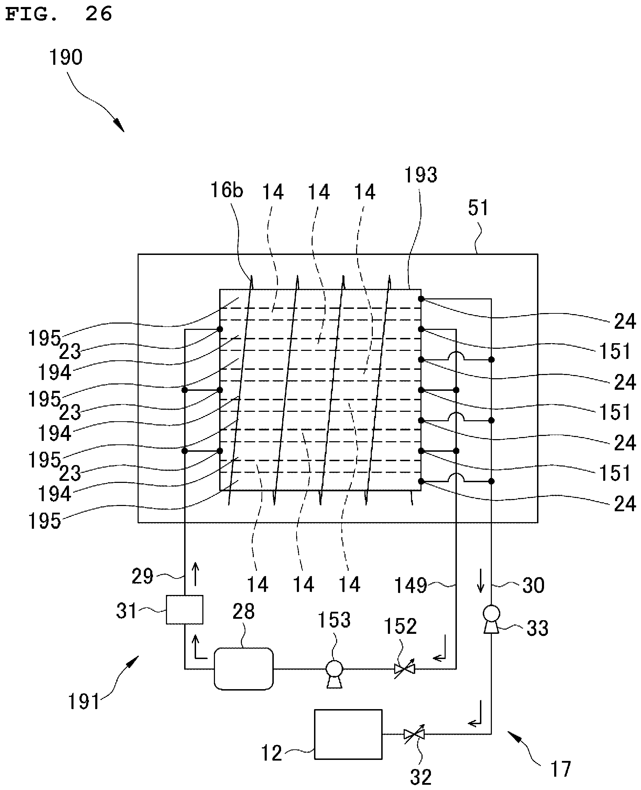

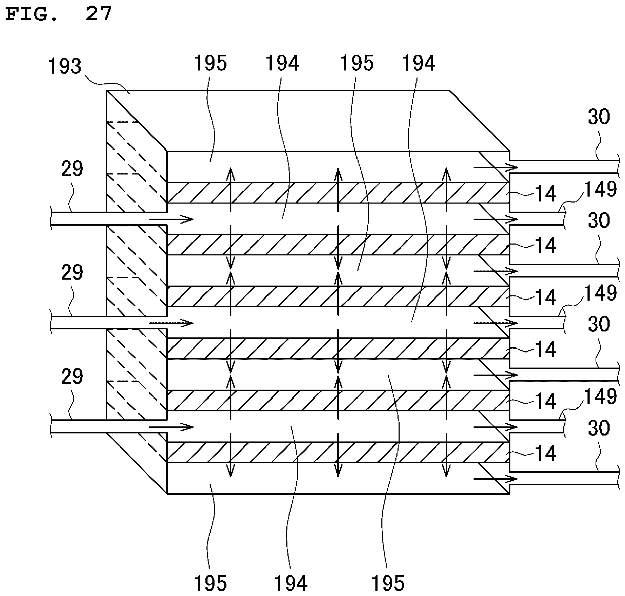

As shown in Fig. 26, blast furnace equipment 190 includes a hydrogen heating device for a blast furnace 191 and the blast furnace 12. The hydrogen heating device for a blast furnace 191 includes a plurality of heat generating elements 14, a sealed container 193 that accommodates the plurality of heat generating elements 14, the non-permeated gas recovery line 149, and the like. The plurality of heat generating elements 14 are each formed into a plate shape. The plurality of heat generating elements 14 are arranged with a gap provided between each other so as to face each other. In the present modification, six heat generating elements 14 are provided inside the sealed container 193 (see Figs. 26 and 27). The heater 16b of the temperature adjustment unit (not shown) is provided on an outer periphery of the sealed container 193. The heater 16b heats the plurality of heat generating elements 14 by inputting electric power from a power supply (not shown).

The sealed container 193 is provided with a plurality of inlets 23, a plurality of outlets 24, and a plurality of non-permeated gas recovery ports 151. The inlet 23 is provided at a position facing the non-permeated gas recovery port 151. The outlets 24 and the non-permeated gas recovery ports 151 are alternately arranged in an arrangement direction of the plurality of heat generating elements 14. The plurality of inlets 23 are connected to the lead-in line 29 by using, for example, a gas lead-in branch pipe (not shown). The plurality of outlets 24 are connected to the lead-out line 30 by using, for example, a gas lead-in branch pipe (not shown).

The sealed container 193 has a plurality of first chambers 194 and a plurality of second chambers 195 partitioned by the plurality of heat generating elements 14. The first chambers 194 and the second chambers 195 are gaps between the heat generating elements 14 whose surfaces face each other, and are alternately arranged in the arrangement direction of the plurality of heat generating elements 14. Each of the first chambers 194 has the inlet 23 and the non-permeated gas recovery port 151. Each of the second chamber 195 has the outlet 24. The first chamber 194 is pressurized by leading in the hydrogen-based gas through the lead-in line 29. The second chamber 195 is depressurized by leading out the hydrogen-based gas through the lead-out line 30. Accordingly, a hydrogen pressure in the first chamber 194 is higher than a hydrogen pressure in the second chamber 195.

As shown in Fig. 27, due to a hydrogen pressure difference generated between the first chamber 194 and the second chamber 195, a part of the hydrogen-based gas led into the first chamber 194 permeates through the heat generating element 14 obtained by stacking a predetermined number of the stacked bodies 14a, moves to the second chamber 195, and is lead out to the lead-out line 30. On the other hand, a non-permeated gas that does not permeate through the heat generating element 14 in the hydrogen-based gas led into the first chamber 194 is recovered in the non-permeated gas recovery line 149. Each of the heat generating elements 14 generates the excess heat by permeation of the hydrogen-based gas. Therefore, similarly to the above-described embodiment, in the hydrogen heating device for a blast furnace 191, the hydrogen-based gas at a predetermined temperature can also be obtained by setting the number of the stacked bodies 14a to a predetermined number in advance. Furthermore, the hydrogen heating device for a blast furnace 191 can increase an output of the excess heat by providing the plurality of heat generating elements 14. In the above-described eleventh modification, a configuration in which the plurality of stacked bodies 14a are stacked is shown, but a configuration including one stacked body 14a may be adopted.

In the above-described eleventh modification, the non-permeated gas that does not permeate through the heat generating element 14 is recovered in the non-permeated gas recovery line 149 and returns to the lead-in line 29, so that the non-permeated gas is circulated, but the present invention is not limited thereto, and may be a hydrogen heating device for a blast furnace in which the non-permeated gas recovery line 149 is not provided and the non-permeated gas is not circulated. In this case, the first chamber 194 has a configuration in which the non-permeated gas recovery port 151 is not provided at a position facing the inlet 23, and only the inlet 23 is provided.

The hydrogen-based gas led into the first chamber 194 permeates through the heat generating element 14, moves to the second chamber 195, and is led out to the lead-out line 30. By permeating through the stacked bodies 14a of the heat generating element 14, the hydrogen-based gas generates the excess heat in the stacked bodies 14a, is heated by the excess heat generated in these stacked bodies 14a, and moves to the second chamber 195. Therefore, similarly to the above-described eleventh modification, in the hydrogen heating device for a blast furnace, the hydrogen-based gas at a predetermined temperature can also be obtained by setting the number of the stacked bodies 14a to a predetermined number in advance.

In the above-described eleventh modification, a case has been described in which the plurality of heat generating elements 14 having a plate shape are provided, but the present invention is not limited thereto, and for example, the present invention may be a hydrogen heating device for a blast furnace in which a plurality of heat generating elements 90 having a bottomed cylindrical shape shown in Figs. 14 and 20, a plurality of heat generating elements 98 shown in Fig. 16, a plurality of heat generating elements 160 having a cylindrical shape shown in Fig. 21, and the like are provided, or may be a hydrogen heating device for a blast furnace in which a plurality of heat generating elements having different configurations, such as the heat generating element 90 having a bottomed cylindrical shape and the heat generating element 160 having a cylindrical shape are mixed.

When a plurality of heat generating elements such as the heat generating elements 14, the heat generating elements 90, the heat generating elements 98, and/or the heat generating elements 160 are provided inside one sealed container, the temperature may be adjusted independently for each of the heat generating elements in the sealed container. For example, when the plurality of heat generating elements 90 are provided in one sealed container, one temperature sensor and a heater are provided in one heat generating element 90. That is, the temperature of one heat generating element 90 is detected by one temperature sensor. The plurality of temperature sensor are electrically connected to the control unit 18, and a signal corresponding to the detected temperature of each of the heat generating elements 90 is output to the control unit 18. The control unit 18 independently controls an output of each of the heaters based on the temperature detected by each of the temperature sensors. Therefore, in such a hydrogen heating device for a blast furnace, since the temperature of each of the heat generating elements 90 is independently adjusted and the plurality of heat generating elements 90 are maintained at appropriate temperatures for heat generation, an output of the excess heat can be stabilized.

When a plurality of heat generating elements such as the heat generating elements 14, the heat generating elements 90, the heat generating elements 98, and/or the heat generating elements 160 are provided, the heat generating elements may be provided in different sealed containers. Furthermore, a flow rate adjustment valve may be provided for each of the heat generating elements or each of the sealed containers, and a flow rate of the hydrogen-based gas led into each of the heat generating elements may be controlled by the flow rate adjustment valve.

The hydrogen-based gas that permeates through the heat generating element may be sampled, the sampled hydrogen-based gas may be analyzed, and the heat generation control may be performed based on an analysis result. For example, as shown in Fig. 15, a configuration in which one heat generating element 90 is provided in one sealed container 15 is illustrated as an example, and in this case, a plurality of sealed containers 15 each including the heat generating element 90 therein are provided. An analysis unit is provided for each of the sealed containers 15 each provided with the heat generating element 90, and the hydrogen-based gas that permeates through the heat generating element 90 is sampled for each of the sealed containers 15, and the sampled hydrogen-based gas is analyzed by the analysis unit.

The analysis unit analyzes the hydrogen-based gas after permeating through the heat generating element 90 to specify whether the hydrogen-based gas contains, for example, a gas uniquely generated by a heat generating reaction in the heat generating element 90. In such a hydrogen heating device for a blast furnace, the flow rate of the hydrogen-based gas for each of the sealed containers 15 is adjusted by the control unit 18 based on the analysis result of the analysis unit, so that the heat generation control can be performed to maintain the temperature of the heat generating element 90 at an appropriate temperature for heat generation.

Alternatively, electric resistance of a hydrogen storage metal or a hydrogen storage alloy may be measured and the heat generation control may be performed based on a value of the measured electric resistance. For example, when an example in which the plurality of heat generating elements 90 are provided is described, in this case, an electric resistance measurement unit is provided in each of the heat generating elements 90, and electric resistance of a hydrogen storage metal or a hydrogen storage alloy of the heat generating element 90 is measured by the electric resistance measurement unit. Here, the larger a hydrogen storage amount of the hydrogen storage metal or the hydrogen storage alloy is, the more likely a heat generating reaction occurs in the heat generating element 90. The larger the hydrogen storage amount of the hydrogen storage metal or the hydrogen storage alloy, the smaller the electric resistance of the heat generating element 90. Therefore, the hydrogen storage amount can be estimated by measuring the electric resistance of the hydrogen storage metal or the hydrogen storage alloy of the heat generating element 90. The plurality of electric resistance measurement units are electrically connected to the control unit 18 and output a measurement result of the electric resistance to the control unit 18.

The control unit 18 can adjust the circulation flow rate of the hydrogen-based gas for each of the heat generating elements 90 based on the value of the electric resistance measured by the electric resistance measurement unit, thereby performing the heat generation control to maintain the temperature of the heat generating element 90 at an appropriate temperature for heat generation.

### [Twelfth Modification]

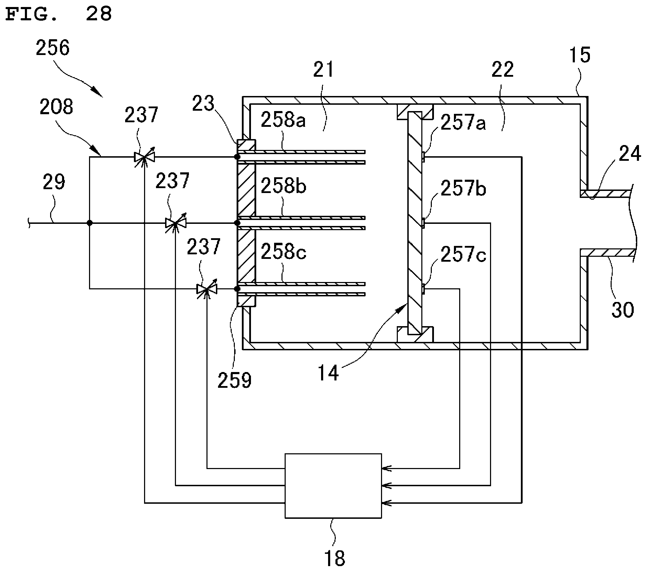

As shown in Fig. 28, a hydrogen heating device for a blast furnace 256 includes the heat generating element 14, a plurality of temperature sensors 257a to 257c that detect the temperature of the heat generating element 14, and a plurality of nozzle portions 258a to 258c that eject the hydrogen-based gas onto the front surface of the heat generating element 14. Here, other configurations such as the blast furnace connected to the lead-out line 30 will be omitted since the description is redundant, and the following description will focus on configurations that are different from the above-described embodiment and modifications.

In the present modification, the hydrogen-based gas is ejected through the plurality of nozzle portions 258a to 258c to one heat generating element 14. Although Fig. 28 shows three temperature sensors 257a to 257c and three nozzle portions 258a to 258c as an example, in reality, it is desirable that the temperature sensors 257a to 257c and the nozzle portions 258a to 258c are arranged in an array such as 3 rows and 3 columns.

In this case, the temperature sensors 257a to 257c are two-dimensionally arranged at equal intervals on the back surface of the heat generating element 14. In the heat generating element 14, a temperature measurement target area provided for each of the temperature sensors 257a to 257c and configured to allow the temperature sensor to detect a temperature is determined, and a temperature of the temperature measurement target area corresponding to each of the temperature sensors 257a to 257c is detected. For example, the temperature sensor 257a detects the temperature of one predetermined temperature measurement target area on the back surface of the heat generating element 14. In the following description, in the case of not being distinguished from each other, the temperature sensors 257a to 257c are referred to as temperature sensors 257.

The plurality of nozzle portions 258a to 258c are respectively provided in the temperature measurement target areas. In the following description, in the case of not being distinguished from each other, the nozzle portions 258a to 258c are referred to as nozzle portions 258.

The temperature sensors 257 are electrically connected to the control unit 18, and output signals corresponding to the temperatures of the temperature measurement target areas to the control unit 18. The nozzle portions 258 are mounted to a mounting plate 259 provided at the inlet 23 of the sealed container 15. The nozzle portions 258 are connected to the lead-in line 29 via the inlet 23, and eject the hydrogen-based gas onto the front surface of the heat generating element 14.

The hydrogen heating device for a blast furnace 256 further includes the control unit 18, a gas lead-in branch pipe 208, and a plurality of flow rate adjustment valves 237. One end of the gas lead-in branch pipe 208 is connected to the lead-in line 29, and the other end thereof is branched and connected to the plurality of nozzle portions 258. The gas lead-in branch pipe 208 and the plurality of nozzle portions 258 are detachable from each other. The plurality of flow rate adjustment valves 237 are provided on the gas lead-in branch pipe 208. The hydrogen heating device for a blast furnace 256 includes one flow rate adjustment valve 237 for one nozzle portion 258, so that the flow rate of the hydrogen-based gas can be controlled for each of the nozzle portions 258.

Based on temperatures detected by the plurality of temperature sensors 257, the control unit 18 performs change control to change the nozzle portion 258 that ejects the hydrogen-based gas. The change control will be described below.

When an operation of the hydrogen heating device for a blast furnace 256 is started, the control unit 18 sets input electric power to a heater (not shown) and an opening degree of all of the flow rate adjustment valves 237 to predetermined initial set values. Accordingly, the temperature of the heat generating element 14 rises up to an appropriate temperature for heat generation. At the initial set values, the hydrogen-based gas is ejected from all of the nozzle portions 258. The heater (not shown) is provided on the outer periphery of the sealed container 15 as, for example, in the hydrogen heating device for a blast furnace 11 according to the above-described embodiment.

The control unit 18 acquires temperatures detected by the temperature sensors 257, and compares each of the acquired temperatures with a reference temperature. The reference temperature is, for example, a temperature at which it can be assumed that no excess heat is generated in the temperature measurement target areas. The reference temperature is stored in advance in the control unit 18 for each of the temperature measurement target areas.

When the temperature acquired from the temperature sensor 257 is equal to or lower than the reference temperature, the control unit 18 determines that no excess heat is generated in the temperature measurement target area in which the temperature is acquired. The control unit 18 maintains, at the initial set values, the input electric power to the heater (not shown) and the opening degree of the flow rate adjustment valve 237 corresponding to the temperature measurement target area in which it is determined that no excess heat is generated. Accordingly, in the heat generating element 14, generation of the excess heat can be promoted in the temperature measurement target area in which no excess heat is generated.

On the other hand, when the temperature acquired from the temperature sensor 257 is higher than the reference temperature, the control unit 18 determines that the excess heat is generated in the temperature measurement target area in which the temperature is acquired. The control unit 18 increases the opening degree of the flow rate adjustment valve 237 corresponding to the temperature measurement target area in which it is determined that the excess heat is generated, so that the flow rate of the hydrogen-based gas ejected from the nozzle portion 258 to the temperature measurement target area is increased. The temperature of the temperature measurement target area that is increased due to the generation of the excess heat is returned to an appropriate temperature for heat generation by increasing the flow rate of the hydrogen-based gas. Accordingly, an output of the excess heat can be increased in the temperature measurement target area in which the excess heat is generated.

The hydrogen heating device for a blast furnace 256 performs the change control for each of the plurality of temperature measurement target areas so as to change the nozzle portions 258 that eject the hydrogen-based gas according to a heat generation state of the heat generating element 14 that changes over time, and thus, an output of the excess heat of the heat generating element 14 can be stabilized.

In the temperature measurement target area in which no excess heat is generated and the temperature measurement target area in which the excess heat is generated, the hydrogen heating device for a blast furnace 256 may perform the heat generation control in the temperature measurement target area in which no excess heat is generated. Accordingly, the number of the temperature measurement target areas in which the excess heat is generated can be increased, and thus an output of the excess heat of all of the heat generating elements 14 and the entire device can be increased.

The hydrogen heating device for a blast furnace 256 may include the plurality of heat generating elements 14. An output of the excess heat of the entire device can be further increased by performing the change control for each of the heat generating elements 14.

### [Experiment]

A part of configurations of the hydrogen heating device for a blast furnace 121 (see Fig. 17) according to the above-described sixth modification was changed to prepare an experimental hydrogen heating device for a blast furnace. An experiment was performed to evaluate excess heat of a heat generating element including one stacked body by using the experimental hydrogen heating device for a blast furnace. First, the experimental hydrogen heating device for a blast furnace will be described, and then an experimental method and an experimental result will be described.

In the hydrogen heating device for a blast furnace 121 according to the above-described sixth modification, an electric heating wire as the heater 16b was wound around the outer periphery of the mounting pipe 125, while in the experimental hydrogen heating device for a blast furnace, an electric furnace was provided to cover an outer periphery of a sealed container. In the experimental hydrogen heating device for a blast furnace, a heat generating element including one stacked body in which multilayer films provided on two sides of a support were used.

The experimental hydrogen heating device for a blast furnace will be described in more detail. The experimental hydrogen heating device for a blast furnace includes the heat generating element including one stacked body that generates heat by occluding and discharging hydrogen, a sealed container that has a first chamber and a second chamber partitioned by the heat generating element, and a temperature adjustment unit that adjusts a temperature of the heat generating element.

The heat generating element will be described. The heat generating element includes only one stacked body in which the multilayer films on two surfaces of the support. Two types of heat generating elements having different configurations of the multilayer film of the stacked body were prepared and used as Experimental Example 26 and Experimental Example 27. A substrate made of Ni and having a diameter of 20 mm and a thickness of 0.1 mm was used as the support. The support was prepared by performing vacuum annealing at 900° for 72 hours in vacuum and then etching two surfaces of the substrate with a concentrated nitric acid.

The multilayer films were formed on the two surfaces of the support by using an ion beam sputtering device. Each of the multilayer films according to Experimental Example 26 has a first layer made of Cu and a second layer made of Ni. The number of stacking configurations of the first layer and the second layer (the number of layers of the multilayer film) according to Experimental Example 26 was 6. Each of the multilayer films according to Experimental Example 27 has a first layer made of Cu, a second layer made of Ni, and a third layer made of CaO. The number of stacking configurations of the first layer, the second layer, and the third layer (the number of layers of the multilayer film) according to Experimental Example 27 was 6.

The sealed container will be described. The sealed container includes a quartz glass pipe, a vacuum pipe for vacuum evacuating an inside of the quartz glass pipe, a mounting pipe for mounting the heat generating element inside the quartz glass pipe, and the like. A tip end of the quartz glass pipe is sealed and a base end thereof is opened.

The vacuum pipe is connected to the base end of the quartz glass pipe. A recovery line for recovering a gas inside the quartz glass pipe is connected to the vacuum pipe. Here, in order to confirm whether the excess heat is generated from the heat generating element, the hydrogen-based gas led out of the sealed container is recovered through the recovery line and returns to the sealed container. The recovery line is provided with a vacuum evacuation unit including a turbo molecular pump and a dry pump, a pressure sensor that detects an internal pressure of the quartz glass pipe, and a vacuum gauge that measures a permeation amount (a hydrogen permeation amount) of hydrogen permeating through a heat generating element. The vacuum evacuation unit is not connected to the mounting pipe. Therefore, an inside of the mounting pipe is not vacuum evacuated.

The mounting pipe is inserted into the quartz glass pipe through the vacuum pipe, one end of the mounting pipe is provided outside the vacuum pipe (outside the quartz glass pipe), and the other end of the mounting pipe is provided inside the quartz glass pipe. The mounting pipe is made of SUS.

A lead-in line for leading the hydrogen-based gas into the mounting pipe is connected to one end of the mounting pipe. The lead-in line is provided with a hydrogen cylinder that stores the hydrogen-based gas, a pressure sensor that detects an internal pressure of the mounting pipe, a hydrogen supply valve for supplying and stopping the hydrogen-based gas to the mounting pipe, and a regulator valve for adjusting a pressure.

The other end of the mounting pipe is provided with a VCR joint that allows the heat generating element to be attached and detached. The VCR joint has two leak holes that pass through an inner peripheral surface and an outer peripheral surface of the VCR joint at a position where the heat generating element is provided. The heat generating element is provided inside the VCR joint in a state of being interposed between two SUS gaskets.

In the sealed container, an internal space of the mounting pipe and an internal space of the quartz glass pipe are partitioned by the heat generating element. The internal space of the mounting pipe is pressurized by leading in the hydrogen-based gas. The internal space of the quartz glass pipe is depressurized by vacuum evacuating the gas. Accordingly, a hydrogen pressure in the internal space of the mounting pipe is higher than a hydrogen pressure in the internal space of the quartz glass pipe. The internal space of the mounting pipe functions as the first chamber, and the internal space of the quartz glass pipe functions as the second chamber.

Hydrogen permeates from the internal space of the mounting pipe, which is a high pressure side, to the internal space of the quartz glass pipe, which is a low pressure side, due to a pressure difference generated between two sides of the heat generating element. As described above, in a hydrogen permeation process, the heat generating element generates heat by occluding hydrogen from one surface (front surface) at the high pressure side and generates excess heat by discharging hydrogen from the other surface (back surface) at the low pressure side.

The temperature adjustment unit will be described. The temperature adjustment unit includes a temperature sensor that detects a temperature of the heat generating element, a heater that heats the heat generating element, and an output control unit that controls an output of the heater based on the temperature detected by the temperature sensor. A thermocouple (a K type sheath thermocouple) was used as the temperature sensor. In the experiment, two thermocouples (a first thermocouple and a second thermocouple) were prepared and inserted into the two leak holes of the VCR joint. The two thermocouples were brought into contact with the heat generating element, and the temperature of the heat generating element was measured. An electric furnace was used as the heater. The electric furnace covers an outer periphery of the quartz glass pipe. A control thermocouple is provided in the electric furnace. The output control unit is electrically connected to the control thermocouple and the electric furnace, and drives the electric furnace at a predetermined voltage based on a temperature detected by the control thermocouple. The electric furnace is driven by an alternating current power supply of 100 V. An electric power meter is used to measure input electric power to the electric furnace.

Next, an experimental method and an experimental result will be described. The heat generating element was interposed between the two SUS gaskets, fixed to the other end of the mounting pipe by using the VCR joint, and provided inside the quartz glass pipe. The heat generating element was baked at 300°C for 3 days before starting the experiment.

The experiment was started after the above-described baking. The hydrogen supply valve was opened to supply the hydrogen-based gas to the mounting pipe, and the regulator valve was used to adjust a pressure (also referred to as a hydrogen supply pressure) in the first chamber (the internal space of the mounting pipe) to 100 kPa. The quartz glass pipe was vacuum evacuated, and a pressure in the second chamber (the internal space of the quartz glass pipe) was adjusted to 1 × 10⁻⁴ [Pa] . The electric furnace was driven to heat the heat generating element at a predetermined set temperature. The set temperature was changed every half day and was stepwisely raised within a range of 300°C to 900°C.

A reference experiment was performed before experiments of Experimental Example 26 and Experimental Example 27. In the reference experiment, reference experiment samples, that is, only the supports (a Ni substrate having a diameter of 20 mm and a thickness of 0.1 mm) were prepared and used. The reference experiment was performed twice by changing the reference experiment samples.

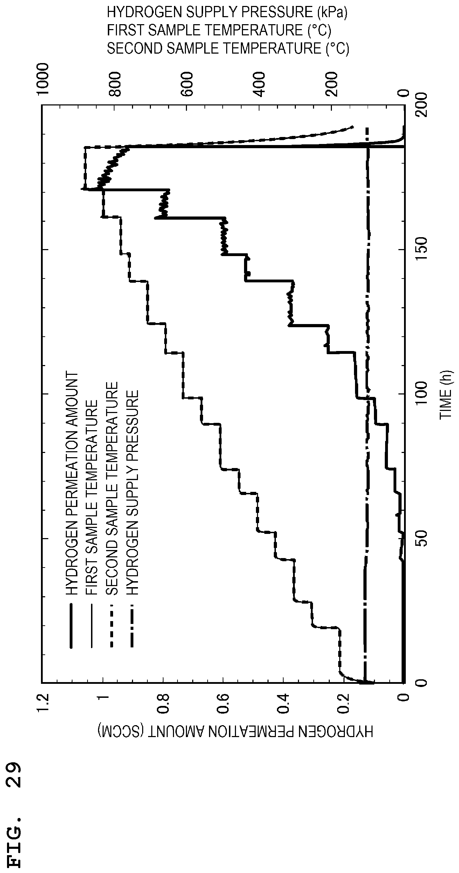

Fig. 29 is a graph showing a relationship among a hydrogen permeation amount, a hydrogen supply pressure, and a sample temperature in the reference experiment. In Fig. 29, a horizontal axis indicates a time (h), a first vertical axis at a left side indicates a hydrogen permeation amount (SCCM), a second vertical axis at a right side indicates a hydrogen supply pressure (kPa), a first sample temperature (°C), and a second sample temperature (°C). The hydrogen permeation amount was calculated from a value of the vacuum gauge whose flow rate is calibrated. The first sample temperature is a temperature detected by the first thermocouple and the second sample temperature is a temperature detected by the second thermocouple. From Fig. 29, it was confirmed that the first sample temperature and the second sample temperature substantially coincided with each other, and temperatures of the reference experiment samples were accurately measured. It was also confirmed that the hydrogen permeation amount increased corresponding to temperature rises of the reference experiment examples. Fig. 29 shows results of the reference experiment for the first time. Since results of the reference experiment for the second time were substantially the same as the results of the reference experiment for the first time, a description of the results of the reference experiment for the second time will be omitted.

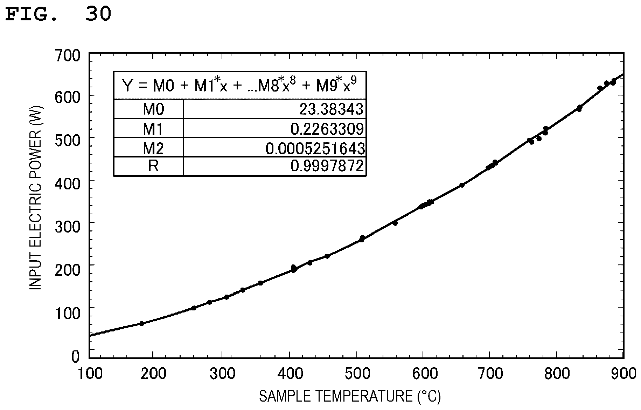

Fig. 30 is a graph showing a relationship between a sample temperature and input electric power in the reference experiment. In Fig. 30, a horizontal axis indicates a sample temperature (°C), and a vertical axis indicates input electric power (W). The input electric power is input electric power to the electric furnace. Since measurement values of the electric power meter greatly fluctuated due to ON/OFF control of the alternating current power supply, the measurement values were added at each set temperature, and the input electric power was calculated based on a slope of the addition. The input electric power was calculated for regions in which measurement values of the electric power meter were stable after a sufficient period of time after the set temperature was changed. An average value of temperatures detected by the first thermocouple and an average value of temperatures detected by the second thermocouple were calculated for each of the regions described above, the two average values were averaged as the sample temperature. Fig. 30 is a graph obtained by plotting results of the reference experiment performed twice and shows a calibration curve created by using a least squares method. In Fig. 30, Y represents a function representing a calibration curve, M0 represents a constant term, M1 represents a first-order coefficient, M2 represents a second-order coefficient, and R represents a correlation coefficient. The excess heat in Experimental Example 26 and the excess heat in Experimental Example 27 were evaluated based on the results of the reference experiment.

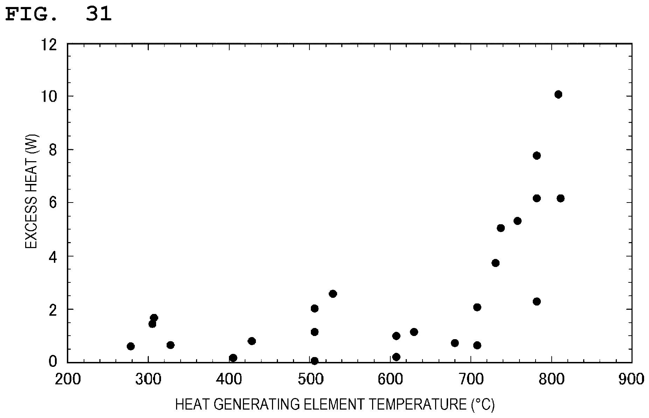

Fig. 31 is a graph showing a relationship between a heat generating element temperature and the excess heat in Experimental Example 26. In Fig. 31, a horizontal axis indicates a heat generating element temperature (°C), and a vertical axis indicates excess heat (W). An average value of temperatures detected by the first thermocouple and an average value of temperatures detected by the second thermocouple were calculated, the two average values were averaged as the heat generating element temperature by using the same method as the method for calculating the sample temperature in the reference experiment. A method for calculating the excess heat will be described. First, the heat generating element temperature at specific input electric power is measured (referred to as a measured temperature). Next, input electric power (referred to as converted electric power) in the reference experiment corresponding to the measured temperature is calculated by using the calibration curve shown in Fig. 30. Then, a difference between the converted electric power and the specific input electric power was calculated, and the difference was used as electric power of the excess heat. A method for calculating the specific input electric power is the same as the method for calculating the input electric power in the reference experiment. In Fig. 31, the electric power of the excess heat is expressed as "excess heat (W)". From Fig. 31, it was confirmed that the excess heat was generated in a range in which the heat generating element temperature is 300°C to 900°C. It was confirmed that a maximum value of the excess heat was about 2 W at 600°C or lower, and the excess heat increased at 700°C or higher and was about 10 W at about 800°C.

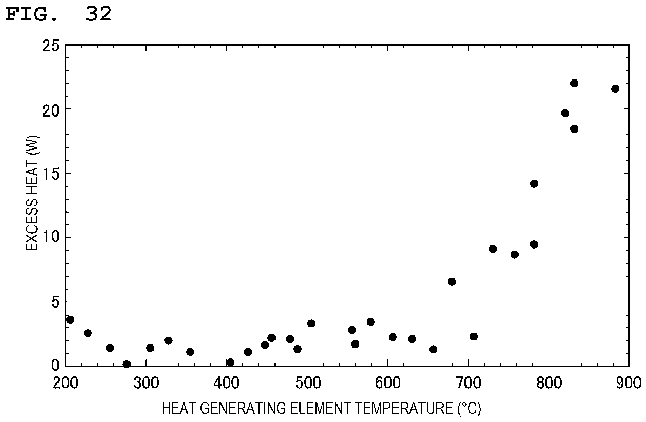

Fig. 32 is a graph showing a relationship between a heat generating element temperature and the excess heat in Experimental Example 27. In Fig. 32, a horizontal axis indicates a heat generating element temperature (°C), and a vertical axis indicates excess heat (W). From Fig. 32, it was confirmed that the excess heat was generated in a range in which the heat generating element temperature is 200°C to 900°C. It was confirmed that a maximum value of the excess heat was about 4 W in a range of 200°C to 600°C, and the excess heat increased at 700°C or higher and was larger than 20 W at about 800°C.

When Experimental Example 26 and Experimental Example 27 are compared, it is found that a generation amount of the excess heat at 600°C or lower tends to be larger in Experimental Example 27. It is found that the excess heat at 700°C or higher tends to increase in both Experimental Example 26 and Experimental Example 27. It is found that at 700°C or higher, the excess heat in Experimental Example 27 increases by about twice the excess heat in Experimental Example 26.

When excess heat per unit area at about 800°C was calculated in Experimental Example 11 (see Fig. 12), Experimental Example 26 (see Fig. 31), and Experimental Example 27 (see Fig. 32), the excess heat per unit area in Experimental Example 11 was about 0.5 W/cm², the excess heat per unit area in Experimental Example 26 was about 5 W/cm², and the excess heat per unit area in Experimental Example 27 was about 10 W/cm². Based on the results, it was found that the excess heat generated in Experimental Example 26 was about 10 times that in Experimental Example 11, and the excess heat generated in Experimental Example 27 was about 20 times that in Experimental Example 11.

Accordingly, it is found that since the excess heat is also generated in the heat generating element including only one stacked body, the hydrogen-based gas can be heated by the excess heat. It is found that as the number of the stacked bodies increases, the heat generating element becomes thicker, and a distance for the hydrogen-based gas to permeate through the heat generating element becomes longer, and thus the longer the time for heating is and the larger the number of the stacked bodies is, the higher the temperature of the hydrogen-based gas after permeating through the heat generating element becomes. Therefore, it is found that in the heat generating element, the temperature of the hydrogen-based gas heated by the heat generating element can be adjusted by adjusting the number of the stacked bodies.

### [Second Embodiment]

In the second embodiment, a partial pressure of hydrogen in a gas led into a first chamber is different from a partial pressure of hydrogen in a gas led into a second chamber, and hydrogen permeates through a heat generating element by utilizing a hydrogen pressure difference between the first chamber and the second chamber. In the second embodiment, a "hydrogen pressure" is referred to as a "hydrogen partial pressure".

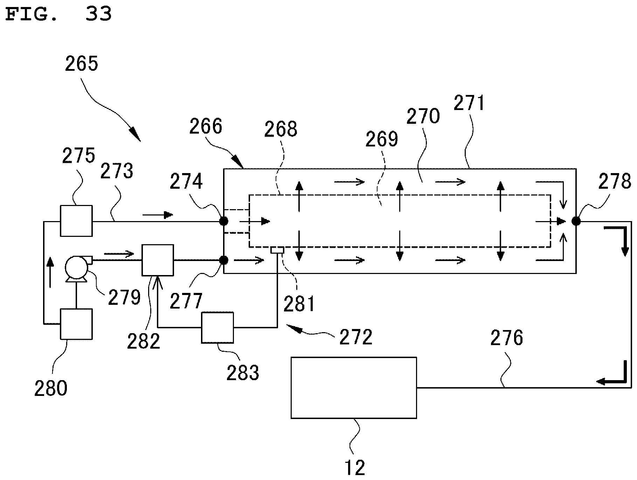

As shown in Fig. 33, blast furnace equipment 265 includes a hydrogen heating device for a blast furnace 266 and the blast furnace 12. The hydrogen heating device for a blast furnace 266 includes a heat generating element 268 that generates heat by occluding and discharging hydrogen, a sealed container 271 that has a first chamber 269 and a second chamber 270 partitioned by the heat generating element 268, and a temperature adjustment unit 272 that adjusts a temperature of the heat generating element 268. A structure that partitions the first chamber 269 and the second chamber 270 is not limited to a structure including the heat generating element 268 only, and may be a structure in which a part of the structure is the heat generating element 268 and the other part thereof may be a hydrogen shield wall such as a metal or an oxide.

The heat generating element 268 is formed into a bottomed cylindrical shape. The heat generating element 268 may have a similar configuration to the heat generating element 90 shown in Fig. 14, for example, and has the stacked bodies 90a stacked in a predetermined number. That is, in the heat generating element 268, the predetermined number of the stacked bodies each having a multilayer film provided on an outer surface of a support formed into a bottomed cylindrical shape are stacked, and the support and the multilayer film are alternately arranged from the inside to the outside. The multilayer film may be provided on an inner surface of the support, the multilayer film and the support may be arranged alternately from the inside to the outside, or the multilayer films may be provided on both an inner surface and an outer surface of the innermost support. In the present embodiment, a configuration in which the plurality of stacked bodies 90a are stacked is shown, but a configuration including one stacked body 90a may be adopted.

A shape of the support is not limited to the bottomed cylindrical shape, and may be a bottomed polygonal cylindrical shape, a flat plate, or the like. The support is preferably made of a material that allows permeation of hydrogen and has heat resistance and pressure resistance, and may be made of the same material as, for example, the support 61. The multilayer film may have the same configuration as, for example, the multilayer film 62. In the present embodiment, the number of the heat generating elements 268 is one, and may be two or more.

The sealed container 271 is a hollow container and accommodates the heat generating element 268 therein. The sealed container 271 is preferably made of a material having heat resistance and pressure resistance. Examples of the material of the sealed container 271 include a metal and ceramics. Examples of the metal include Ni, Cu, Ti, carbon steel, austenitic stainless steel, heat-resistant nonferrous alloy steel, and ceramics. Examples of the ceramics include Al₂O₃, SiO₂, SiC, and ZnO₂. It is desirable to cover an outer periphery of the sealed container 271 with a heat insulation member. In the present embodiment, the number of the sealed container 271 accommodating the heat generating element 268 is one, and may be two or more.

The first chamber 269 is defined by an inner surface of the heat generating element 268. The first chamber 269 has an inlet 274 connected to a hydrogen lead-in line 273. The hydrogen lead-in line 273 is provided with a hydrogen tank 275 that stores the hydrogen-based gas. The hydrogen-based gas circulating through the hydrogen lead-in line 273 is led into the first chamber 269 via the inlet 274.

The second chamber 270 is defined by an outer surface of the heat generating element 268 and an inner surface of the sealed container 271. The second chamber 270 has an inlet 277 connected to a hydrogen tank 280 and an outlet 278 connected to a lead-out line 276. A circulation blower 279 leads the hydrogen-based gas in the hydrogen tank 280 into the second chamber 270 (the sealed container 271) through the inlet 277. The lead-out line 276 is connected to the blast furnace 12.

A hydrogen partial pressure of the hydrogen-based gas led into the first chamber 269 and a hydrogen partial pressure of the hydrogen-based gas led into the second chamber 270 are measured by a hydrogen sensor (not shown). The hydrogen partial pressure in the first chamber 269 is preferably, for example, 10 times to 10000 times the hydrogen partial pressure in the second chamber 270. For example, the hydrogen partial pressure in the first chamber 269 is 10 kPa to 1 MPa, and the hydrogen partial pressure in the second chamber 270 is 1 Pa to 10 kPa. Accordingly, hydrogen in the first chamber 269 permeates through the heat generating element 268 and moves to the second chamber 270. The heat generating element 268 generates the excess heat by permeation of hydrogen. A heat medium circulates through the second chamber 270, so that the excess heat of the heat generating element 268 can be transferred to the heat medium, and the hydrogen partial pressure in the second chamber 270 can be made lower than the hydrogen partial pressure in the first chamber 269.

The hydrogen heating device for a blast furnace 266 includes a control unit (not shown), and is configured to control the hydrogen partial pressure in the first chamber 269 and the hydrogen partial pressure in the second chamber 270 by the control unit. For example, when the hydrogen partial pressure in the first chamber 269 is increased and a hydrogen partial pressure difference between the first chamber 269 and the second chamber 270 is increased, the hydrogen permeation amount can be increased and generation of the excess heat of the heat generating element 268 can be promoted. When the hydrogen partial pressure in the first chamber 269 is decreased and the hydrogen partial pressure difference between the first chamber 269 and the second chamber 270 is decreased, the hydrogen permeation amount can be decreased and generation of the excess heat of the heat generating element 268 can be prevented. Instead of changing the hydrogen partial pressure in the first chamber 269, generation of the excess heat of the heat generating element 268 can be promoted or prevented by decreasing or increasing the hydrogen partial pressure in the second chamber 270. Both the hydrogen partial pressure in the first chamber 269 and the hydrogen partial pressure in the second chamber 270 may be changed. Generation of the excess heat of the heat generating element 268 can be adjusted by changing a flow rate or a temperature of the hydrogen-based gas in the inlet 277.

The temperature adjustment unit 272 includes a temperature sensor 281 that detects the temperature of the heat generating element 268, a heater 282 that heats the heat generating element 268, and an output control unit 283 that controls an output of the heater 282 based on the temperature detected by the temperature sensor 281. Although the temperature sensor 281 is provided on an outer surface of the heat generating element 268 in Fig. 33, the temperature sensor 281 may detect a temperature of a portion where the temperature of the heat generating element 268 can be estimated. The heater 282 is operated when an operation of the hydrogen heating device for a blast furnace 266 is started or when the temperature of the heat generating element 268 is reduced. The heater 282 heats the hydrogen-based gas from the hydrogen tank 280, leads the heated hydrogen-based gas to the second chamber 270, and heats the heat generating element 268.

The hydrogen heating device for a blast furnace 266 can generate the excess heat from the heat generating element 268, send the hydrogen-based gas heated by the heat generating element 268 to the blast furnace 12 through the lead-out line 276, and utilize the hydrogen gas as the reducing gas in the blast furnace 12.

As described above, in addition to a configuration in which the temperature of the hydrogen-based gas is raised to a predetermined temperature, the hydrogen heating device for a blast furnace 266 has a configuration such that hydrogen permeates through the heat generating element 268 by utilizing the hydrogen partial pressure difference between the first chamber 269 and the second chamber 270. Therefore, in the hydrogen heating device for a blast furnace 266, in addition to exerting the same effect as in the above-described embodiment, it is unnecessary to generate an apparent pressure difference acquired by a pressure sensor between the first chamber 269 and the second chamber 270 by, for example, bringing the second chamber 270 into a vacuum state. Therefore, a risk of deforming or breaking the hydrogen heating device for a blast furnace 266 is reduced.

In the hydrogen heating device for a blast furnace 266 according to the present embodiment, since the hydrogen-based gas can be heated without consuming a large amount of energy, a generation amount of CO₂ can be reduced. Therefore, in the hydrogen heating device for a blast furnace, by using the heated hydrogen-based gas as the reducing gas in the blast furnace in this manner during an operation on the blast furnace, the generation amount of CO₂ can be reduced even if the hydrogen-based gas is used as the reducing gas in the blast furnace.

### [Third Embodiment]

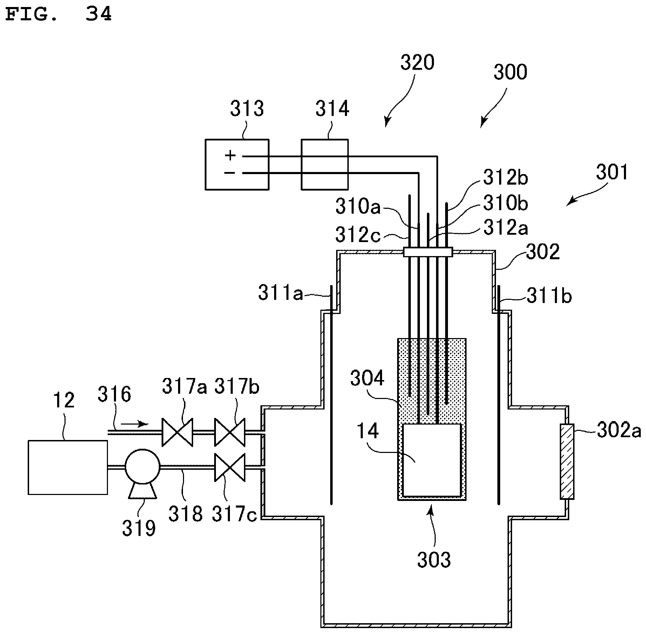

The above-described first embodiment and second embodiment describe the hydrogen heating devices for blast furnaces each having a configuration in which the first chamber and the second chamber are provided inside the sealed container, the hydrogen-based gas circulates from the first chamber to the second chamber via the heat generating element, and the hydrogen-based gas permeates through the heat generating element, and each heating the hydrogen-based gas by the excess heat generated in the heat generating element, but the present invention is not limited thereto. For example, as shown in Fig. 34, the present invention may be a hydrogen heating device for a blast furnace 301 having a configuration in which excess heat is generated in the heat generating element 14 provided inside a sealed container 302 without providing a first chamber and a second chamber inside the sealed container 302, and adjusting the temperature of the hydrogen-based gas by adjusting the number of stacked bodies provided in the heat generating element.

Fig. 34 is a schematic diagram showing the hydrogen heating device for a blast furnace 301 according to the third embodiment. In this case, blast furnace equipment 300 includes the hydrogen heating device for a blast furnace 301 and the blast furnace 12. The hydrogen heating device for a blast furnace 301 includes the sealed container 302 into which the hydrogen-based gas is led, a heat generating structure 303 provided inside the sealed container 302, and a temperature adjustment unit 320 that adjusts the temperature of the heat generating element 14 of the heat generating structure 303. Similarly to the above-described first embodiment, the hydrogen heating device for a blast furnace 301 is a device in which the hydrogen-based gas is led into the sealed container 302, and then the heat generating element 14 is heated by the temperature adjustment unit 320 in the heat generating structure 303, thereby generating the excess heat in the heat generating element 14. Since a configuration of the heat generating element 14 is the same as that in the first embodiment, a description thereof will be omitted here to avoid a redundant description.

The sealed container 302 is made of, for example, stainless steel (SUS306 or SUS316). A reference numeral 302a denotes a window made of a transparent member such as Kovar glass, which allows an operator to directly check an inside of the sealed container 302 visually while maintaining a sealed state inside the sealed container 302. The sealed container 302 is provided with a lead-in line 316, and the hydrogen-based gas is led through the lead-in line 316 into the sealed container 302 via adjustment valves 317a and 317b. Thereafter, the lead-in of the hydrogen-based gas through the lead-in line 316 into the sealed container 302 is stopped by the adjustment valves 317a and 317b, and a certain amount of the hydrogen-based gas is stored inside the sealed container 302. A reference numeral 319 denotes a dry pump, which can lead out the gas in the sealed container 302 to the outside of the sealed container 302 through the lead-out line 318 and an adjustment valve 317c, and perform vacuum evacuation, pressure adjustment, and the like as necessary.

The temperature adjustment unit 320 adjusts the temperature of the heat generating element 14 and maintains the heat generating element 14 at an appropriate temperature for heat generation. The appropriate temperature for heat generation in the heat generating element 14 is within a range of, for example, 50°C or higher and 1000°C or lower. The temperature adjustment unit 320 includes temperature sensors 311a, 311b, 312a, 312b, and 312c, and a heater (not shown) that heats the heat generating element 14.

In the present embodiment, the temperature sensors 311a and 311b are provided along an inner wall of the sealed container 302, and measure a temperature of the inner wall. The other temperature sensors 312a to 312c are provided on a holder 304 that holds the heat generating element 14 in the heat generating structure 303, and measure a temperature in the holder 304. The temperature sensors 312a to 312c have different lengths, and measure temperatures of portions of the holder 304, the portions are at, for example, a lower stage near the heat generating element 14, an upper stage away from the heat generating element 14, and a middle stage located between the lower stage and the upper stage.

The temperature sensors 311a, 311b, 312a, 312b, and 312c are electrically connected to the control unit 18 (not shown), and output signals corresponding to the detected temperatures to the control unit.

The heater that heats the heat generating element 14 is, for example, an electric heating wire of an electric resistance heat generating type, and is wound around an outer periphery of the sealed container 302, or disposed on the holder 304. The heater is electrically connected to a power supply 313, and generates heat by inputting electric power from the power supply 313. The heater may be an electric furnace that covers the outer periphery of the sealed container 302. Alternatively, the heater may be provided in the lead-in line 316, and the heat generating element 14 may be heated by the heater heating the hydrogen-based gas circulating through the lead-in line 316.

In the present embodiment, for example, the heater is provided on the holder 304, and the heater and the power supply 313 are connected by wirings 310a and 310b. A reference numeral 314 denotes an ammeter-voltmeter provided on the wirings 310a and 310b, which can measure input current and input electric power applied to the heater during heating of the heater.

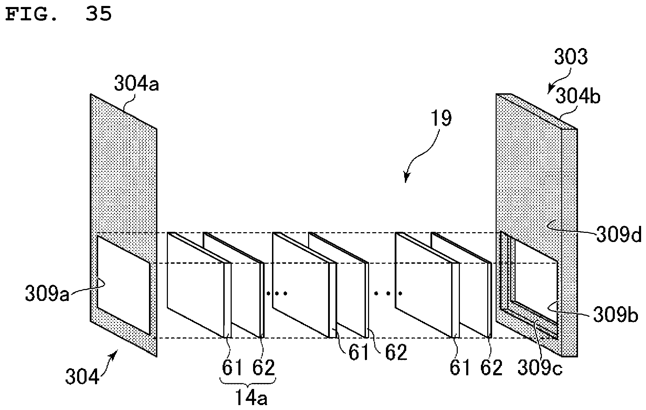

Next, the heat generating structure 303 will be described. As shown in Fig. 35, the heat generating structure 303 includes the holder 304 including a pair of half-body holders 304a and 304b, and has a configuration in which the heat generating element 14 obtained by staking the plurality of stacked bodies 14a each including the support 61 and the multilayer film 62 is interposed between the half-body holders 304a and 304b. The heater is not shown and is, for example, a ceramic heater having a plate shape, and is provided at a predetermined position of the holder 304. The heater may be interposed between the half-body holders 304a and 304b together with the heat generating element 14.

The half-body holder 304a, which is one of the half-body holders constituting the holder 304, is made of ceramics and formed into a rectangular shape, and includes an opening 309a provided at a predetermined position. In the half-body holder 304a, the heat generating element 14 is disposed in the opening 309a and the heat generating element 14 is exposed from a region of the opening 309a. The half-body holder 304b, which is the other half-body holder, is made of ceramics and formed into a rectangular shape similar to the half-body holder 304a. The half-body holder 304b includes an opening 309b at a position overlapping the opening 309a of the half-body holder 304a when being integrated with the half-body holder 304a by overlapping.

In the half-body holder 304b, a stepped portion 309c is provided at a peripheral edge of the opening 309b on a contact surface 309d that comes into contact with the half-body holder 304a. In the stepped portion 309c, the heat generating element 14 is fitted and positioned. Accordingly, in the half-body holder 304b, when the heat generating element 14 is fitted into the stepped portion 309c, the heat generating element 14 is disposed in the opening 309b and the heat generating element 14 is exposed from the region of the opening 309b. When the half-body holders 304a and 304b are superimposed on each other, the heat generating element 14 fitted into the stepped portion 309c is inhibited by a contact surface on a peripheral edge of the opening 309a in the half-body holder 304a, is accommodated in the stepped portion 309c, and is built in the holder 304.

As described above, also in the hydrogen heating device for a blast furnace 301 according to the third embodiment, similarly to the above-described first embodiment, hydrogen is occluded in the heat generating element 14 and hydrogen is also discharged, heat is generated by occluding hydrogen in the heat generating element 14, and heat is generated by discharging hydrogen to generate excess heat. In the heat generating element 14, the hydrogen-based gas is heated by the excess heat generated by the heat generating element 14. The thicker the heat generating element 14 is, the more easily the hydrogen-based gas is heated by the excess heat generated by the heat generating element 14, and the higher the temperature of the hydrogen-based gas becomes.

Therefore, similarly to the above-described first embodiment, in the hydrogen heating device for a blast furnace 301, the hydrogen-based gas at a predetermined temperature can also be obtained. Accordingly, in the hydrogen heating device for a blast furnace 301, since the heat generating element that generates heat by occluding and discharging hydrogen is used to heat the hydrogen-based gas, an inexpensive, clean, and safe heat energy source can be utilized to supply the heated hydrogen-based gas as the reducing gas to the blast furnace 12.

In the present embodiment, a configuration in which the plurality of stacked bodies 14a are stacked is shown, but a configuration including one stacked body 14a may be adopted.

In the hydrogen heating device for a blast furnace according to the present embodiment, since the hydrogen-based gas can be heated without consuming a large amount of energy, a generation amount of CO₂ can be reduced. Therefore, in the hydrogen heating device for a blast furnace, by using the heated hydrogen-based gas as the reducing gas in the blast furnace in this manner during an operation on the blast furnace, the generation amount of CO₂ can be reduced even if the hydrogen-based gas is used as the reducing gas in the blast furnace.

The heat generating element is not limited to one formed into a plate shape or a cylindrical shape. For example, each of the stacked bodies of the heat generating element may be one in which powder including a hydrogen storage metal or a hydrogen storage alloy is accommodated in a container made of a material (for example, a porous body, a hydrogen permeable film, and a proton conductor) that allows hydrogen to permeate.

The hydrogen heating device for a blast furnace is not limited to those described in the above-described embodiments and modifications, and may be configured by appropriately combining the hydrogen heating devices for blast furnaces according to the above-described embodiments and modifications. For example, the pump 33 is provided in the lead-in line 29 to adjust the inside of the sealed container 15 to a predetermined pressure and to send the hydrogen-based gas to the blast furnace 12, but the present invention is not limited thereto, and the pump 33 may be provided in the lead-out line 30 to maintain a predetermined pressure in the sealed container 15 and to send the hydrogen-based gas to the blast furnace 12.

The above-described embodiments describe the case where the heat generating element in which the plurality of stacked bodies obtained by stacking the support and the multilayer film are overlapped and the plurality of stacked bodies are stacked is applied as the heat generating element including the stacked bodies, but the present invention is not limited thereto. In any one of the embodiments, for example, a heat generating element including one stacked body (including one support and one multilayer film) may be used, or a heat generating element including one or more stacked bodies may be used.

### Reference Sign List

11, 96, 121, 146, 156, 166, 191, 256, 266, 301 hydrogen heating device for a blast furnace
12 blast furnace
14, 19, 74, 75, 80, 90, 98, 160, 268 heat generating element
15, 123, 173, 193, 271, 302 sealed container
16 temperature adjustment unit
21, 126, 184, 194, 269 first chamber
22, 127, 185, 195, 270 second chamber
61, 91, 91a support
62, 92 multilayer film
71 first layer
72 second layer
77 third layer
82 fourth layer

## Claims

1. A hydrogen heating device for a blast furnace that heats a hydrogen-based gas containing hydrogen and supplies the hydrogen-based gas to the blast furnace, the hydrogen heating device for a blast furnace comprising:
a sealed container configured to allow the hydrogen-based gas to be led in;
a heat generating element provided inside the sealed container and configured to generate heat by occluding and discharging the hydrogen; and
a temperature adjustment unit configured to adjust a temperature of the heat generating element, wherein
the heat generating element includes one or more stacked bodies each including a support made of at least one of a porous body, a hydrogen permeable film, and a proton conductor, and a multilayer film supported by the support,
the multilayer film has a first layer made of a hydrogen storage metal or a hydrogen storage alloy and having a thickness of less than 1000 nm, and a second layer made of a hydrogen storage metal or a hydrogen storage alloy different from the first layer, or ceramics and having a thickness of less than 1000 nm, and
the hydrogen-based gas is heated to a predetermined temperature by the heat generating element.

2. The hydrogen heating device for a blast furnace according to claim 1, wherein
a plurality of stacked bodies including the one or more stacked bodies are stacked.

3. The hydrogen heating device for a blast furnace according to claim 1 or 2, wherein
the sealed container is partitioned by the heat generating element into a first chamber and a second chamber, and
the first chamber and the second chamber have different hydrogen pressures, and the hydrogen permeates through the heat generating element by utilizing a hydrogen pressure difference between the first chamber and the second chamber.

4. The hydrogen heating device for a blast furnace according to claim 3, wherein
the heat generating element has a bottomed cylindrical shape,
the first chamber is defined by an inner surface of the heat generating element, and
the second chamber is defined by an outer surface of the heat generating element and an inner surface of the sealed container.

5. The hydrogen heating device for a blast furnace according to claim 3 or 4, wherein
the first chamber has an inlet for leading in the hydrogen-based gas,
the second chamber has an outlet for leading out the hydrogen-based gas, and
the hydrogen pressure in the first chamber is higher than the hydrogen pressure in the second chamber.

6. The hydrogen heating device for a blast furnace according to claim 5, wherein
a non-permeated gas recovery line configured to allow the first chamber to connect to a hydrogen tank, and configured to recover a non-permeated gas that does not permeate through the heat generating element in the hydrogen-based gas led through the inlet into the first chamber and to return the non-permeated gas into the hydrogen tank.

7. The hydrogen heating device for a blast furnace according to claim 6, wherein
the non-permeated gas recovery line includes a non-permeated gas flow rate control unit configured to control a flow rate of the non-permeated gas based on the temperature of the heat generating element detected by a temperature sensor provided in the temperature adjustment unit.

8. The hydrogen heating device for a blast furnace according to any one of claims 5 to 7, further comprising:
a nozzle portion provided between the inlet and the heat generating element and configured to eject, onto the heat generating element, the hydrogen-based gas led through the inlet to an inside of the sealed container.

9. The hydrogen heating device for a blast furnace according to claim 8, wherein
the heat generating element has a bottomed cylindrical shape, and
the nozzle portion has a plurality of ejection ports arranged in an axial direction of the heat generating element, and is configured to eject the hydrogen-based gas through the plurality of ejection ports onto an entire inner surface of the heat generating element.

10. The hydrogen heating device for a blast furnace according to claim 8, wherein
the heat generating element has a plate shape, and
the nozzle portion is configured to eject the hydrogen-based gas onto an entire one surface of the heat generating element.

11. The hydrogen heating device for a blast furnace according to claim 6 or 7, wherein
the heat generating element has a cylindrical shape having two open ends, one end of the heat generating element is connected to the inlet, and the other end of the heat generating element is connected to the non-permeated gas recovery line.

12. The hydrogen heating device for a blast furnace according to any one of claims 1 to 11, further comprising:
a lead-in line configured to allow the hydrogen-based gas stored in a hydrogen tank to be led into the sealed container, wherein
the temperature adjustment unit is configured to heat the heat generating element by heating the hydrogen-based gas circulating through the lead-in line by a heater provided in the lead-in line.

13. The hydrogen heating device for a blast furnace according to claim 3, further comprising:
a first hydrogen occluding and discharging unit provided in the first chamber, made of a hydrogen storage metal or a hydrogen storage alloy, and configured to occlude and discharge the hydrogen;
a second hydrogen occluding and discharging unit provided in the second chamber, made of a hydrogen storage metal or a hydrogen storage alloy, and configured to occlude and discharge the hydrogen; and
a hydrogen pressure control unit configured to perform switching control between a first mode in which the hydrogen pressure in the first chamber is higher than the hydrogen pressure in the second chamber and a second mode in which the hydrogen pressure in the second chamber is higher than the hydrogen pressure in the first chamber.

14. The hydrogen heating device for a blast furnace according to claim 13, wherein
the hydrogen pressure control unit is configured to
heat the first hydrogen occluding and discharging unit and cool the second hydrogen occluding and discharging unit in the first mode, and
heat the second hydrogen occluding and discharging unit and cool the first hydrogen occluding and discharging unit in the second mode.

15. The hydrogen heating device for a blast furnace according to claim 3, wherein
the sealed container accommodates a plurality of heat generating elements including the heat generating element and other heat generating elements,
the plurality of heat generating elements each has a plate shape, and are arranged with a gap provided between each other so as to face each other, and
a plurality of first chambers including the first chamber and other first chambers and a plurality of second chambers including the second chamber and other second chambers are provided inside the sealed container, and are alternately arranged in an arrangement direction of the plurality of heat generating elements.

16. The hydrogen heating device for a blast furnace according to any one of claims 1 to 15, wherein
the first layer is made of any one of Ni, Pd, Cu, Mn, Cr, Fe, Mg, Co, and an alloy thereof, and
the second layer is made of any one of Ni, Pd, Cu, Mn, Cr, Fe, Mg, Co, an alloy thereof, and SiC.

17. The hydrogen heating device for a blast furnace according to any one of claims 1 to 16, wherein
the multilayer film has a third layer made of a hydrogen storage metal, a hydrogen storage alloy, or ceramics different from the first layer and the second layer and having a thickness of less than 1000 nm, in addition to the first layer and the second layer.

18. The hydrogen heating device for a blast furnace according to claim 17, wherein
the third layer is made of any one of CaO, Y₂O₃, TiC, LaB₆, SrO, and BaO.

19. The hydrogen heating device for a blast furnace according to claim 17 or 18, wherein
the multilayer film has a fourth layer made of a hydrogen storage metal or a hydrogen storage alloy different from the first layer, the second layer, and the third layer and having a thickness of less than 1000 nm, in addition to the first layer, the second layer, and the third layer.

20. The hydrogen heating device for a blast furnace according to claim 19, wherein
the fourth layer is made of any one of Ni, Pd, Cu, Cr, Fe, Mg, Co, an alloy thereof, SiC, CaO, Y₂O₃, TiC, LaB₆, SrO, and BaO.

21. A hydrogen heating method for a blast furnace that heats a hydrogen-based gas containing hydrogen and supplies the hydrogen-based gas to the blast furnace, the hydrogen heating method for a blast furnace comprising:
a lead-in step of leading the hydrogen-based gas into a sealed container;
a temperature adjusting step of adjusting a temperature of a heat generating element provided inside the sealed container by a temperature adjustment unit; and
a heat generating step of generating heat from the heat generating element by occluding and discharging the hydrogen in the heat generating element, wherein
the heat generating element includes one or more stacked bodies each including a support made of at least one of a porous body, a hydrogen permeable film, and a proton conductor, and a multilayer film supported by the support,
the multilayer film has a first layer made of a hydrogen storage metal or a hydrogen storage alloy and having a thickness of less than 1000 nm, and a second layer made of a hydrogen storage metal or a hydrogen storage alloy different from the first layer, or ceramics and having a thickness of less than 1000 nm, and
the hydrogen-based gas is heated to a predetermined temperature by the heat generating element.

22. A method for operating a blast furnace, comprising:
a step of blowing a hydrogen-based gas as a reducing gas into the blast furnace through a tuyere of the blast furnace, wherein
the hydrogen-based gas is heated by the hydrogen heating device for a blast furnace according to any one of claims 1 to 20.
